# FASCICULE DE BREVET EUROPEEN

(11) **EP 3 645 236 B1**
(45) Date de publication et mention de la délivrance du brevet: **07.04.2021**
(21) Numéro de dépôt: 18762351.7
(22) Date de dépôt: 28.06.2018
(51) Int. Cl.: B29C 48/49, B29C 48/21, B29C 48/35, B29C 48/12, B29C 48/07, B29D 30/06, B29L 30/00

(54) **TETE D'EXTRUSION AVEC CHENAUX POUR LA RÉALISATION D'INSERTS DANS UNE BANDE PROFILÉE DESTINÉE À LA FABRICATION D'UN PNEUMATIQUE ET PROCÉDÉ D'EXTRUSION CORRESPONDANT**
EXTRUSIONSKOPF MIT KANÄLEN ZUR HERSTELLUNG VON EINSÄTZEN IN EINEM PROFILBAND ZUR HERSTELLUNG EINES LUFTREIFENS UND ENTSPRECHENDES EXTRUSIONSVERFAHREN
EXTRUSION HEAD WITH CHANNELS FOR PRODUCING INSERTS IN A PROFILED BAND FOR MANUFACTURING A PNEUMATIC TYRE AND CORRESPONDING EXTRUSION METHOD

(30) Priorité: 30.06.2017 FR 1756133; 30.06.2017 FR 1756132
(43) Date de publication de la demande: 06.05.2020
(73) Titulaire: Compagnie Générale des Etablissements Michelin, 63000 Clermont-Ferrand (FR)
(72) Inventeur: ROUBY, Mickael, 63040 Clermont-Ferrand Cedex 9 (FR); BESSAC, Christophe, 63040 Clermont-Ferrand Cedex 9 (FR)
(74) Mandataire: Redouté, Gilles Pierre
(86) Numéro de dépôt international: PCT/FR2018/051599
(87) Numéro de publication internationale: WO 2019/002782

(56) Documents cités:
- WO-A1-2017/109392
- JP-A- 2014 180 785
- KR-B1- 101 405 064

## Description

L'invention se situe dans le domaine de l'extrusion d'une bande profilée continue d'un matériau à base de caoutchouc destinée en particulier à la fabrication des pneumatiques.

Plus particulièrement, l'invention concerne l'extrusion de profilés complexes composés de l'assemblage de plusieurs profilés réalisés à partir de mélanges de caoutchouc non vulcanisés de compositions différentes. Ces profilés complexes sont réalisés de manière connue à l'aide d'une machine de coextrusion mettant en oeuvre plusieurs extrudeuses débouchant dans une voute de mise en pression, et comprenant plusieurs entrefers profilés arrangés de sorte que le profilage et la mise en joint finale des différents profilés sont opérés par une même lame de profilage.

Ces profilés complexes sont utilisés en particulier pour la réalisation des bandes de roulement de pneumatiques.

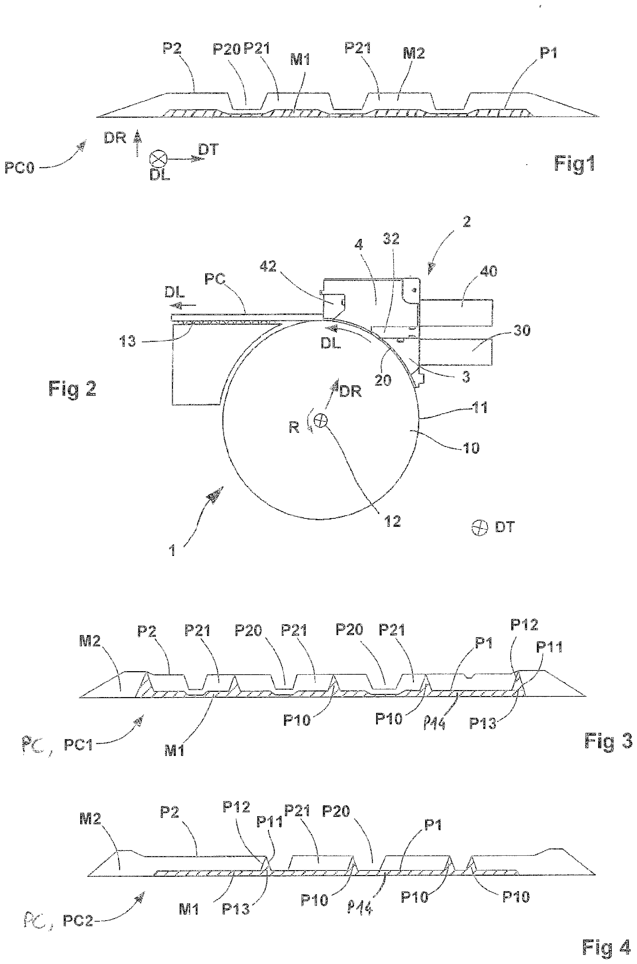

La coupe transversale d'un profilé complexe PC0 est illustrée à la figure 1. Un premier profilé radialement interne P1 formé d'un mélange M1 constitue la sous couche, un second profilé P2, formé d'un mélange M2 préfigure la bande de roulement destinée à venir en contact avec le sol. Des rainures longitudinales P20, préfigurant les sillons longitudinaux du pneumatique, sont placées entre les cordons longitudinaux P21 dans lesquels sont moulés les pains formant la sculpture finale du pneumatique.

Au cours de l'assemblage d'une ébauche de pneumatique, on coiffe l'ébauche de pneumatique en forme de tore d'un tronçon de bande prélevé dans une bande continue obtenue à l'aide de la machine de coextrusion.

Il est également connu d'utiliser des machines comprenant une tête de coextrusion pour réaliser des profils complexes comprenant un insert localisé. Ces machines ont été développées à l'apparition des mélanges à base de silice faiblement conducteurs de l'électricité pour répondre au problème d'écoulement des charges électriques du véhicule.

Ainsi, la publication EP1448355 décrit une machine de coextrusion comportant un rouleau et une tête d'extrusion comprenant au moins deux canaux d'écoulement d'un mélange caoutchouteux de sous-couche et d'un mélange caoutchouteux de bande de roulement, lesdits canaux débouchant sur un orifice d'extrusion au travers duquel sont refoulés les deux mélanges caoutchouteux de sous-couche et de bande de roulement.

La tête d'extrusion comprend également une micro-extrudeuse d'un troisième mélange caoutchouteux électriquement conducteur, munie à son extrémité d'une buse, traversant les deux canaux d'écoulement de sorte que le troisième mélange caoutchouteux électriquement conducteur est inséré dans les mélanges caoutchouteux de sous-couche et de bande de roulement en amont de l'orifice d'extrusion.

La publication EP 0 925 903 décrit une machine de coextrusion dite à nez plat (sans rouleau) comprenant une tête d'extrusion comprenant un premier passage pour l'extrusion de la bande de roulement et un second passage pour l'extrusion de la sous couche considérée comme conductrice de l'électricité. Un troisième passage, disposé en dérivation du second passage, débouche sur une ouverture en fente disposée en arrière de l'orifice d'extrusion de manière à former une bande étroite conductrice de l'électricité traversant la partie de la bande de roulement faiblement conductrice de l'électricité.

L'invention s'intéresse également à la fabrication de profilés complexes destinés à former la bande de roulement d'un pneumatique et comprenant un ou plusieurs inserts. Ces bandes de roulement d'un type nouveau, qui sont décrites par exemple dans les publications WO2016/202703 et WO 2017/109392, comprennent des éléments d'amarrage destinés à renforcer les blocs de structure en cas de sollicitation transversale du pneumatique.

Les éléments d'amarrage peuvent être formés à partir du même mélange ou d'un mélange différent de celui constituant la sous couche.

L'invention s'intéresse également à la fabrication de profilés complexes destinés à former la bande de roulement d'un pneumatique, lesdits profilés pouvant comporter des structures de faible épaisseur qui forment des inserts ou des gommes de bordure et dont le profil peut être perturbé en l'absence de dispositif particulier de mise en oeuvre.

À titre d'exemple, pour des raisons de protection et de résistance, il peut s'avérer intéressant de réaliser des bandes de roulement dans lesquelles les parois des sillons longitudinaux sont recouvertes d'une gomme de bordure de faible épaisseur et de composition différente de la composition du mélange formant la bande de roulement. Cet arrangement permet en particulier de réduire la propagation des coupures liées à des agressions ou à la pénétration de graviers.

Dans un autre ordre d'idées, il peut s'avérer nécessaire de disposer des gommes de bordure du type de celles décrites précédemment pour protéger des bandes de roulement comprenant des inserts disposés à proximité du bord d'un sillon.

Selon l'invention, on propose un procédé de coextrusion d'un profilé complexe constitué de l'assemblage de profilés formés à partir de mélanges de caoutchouc distincts dans lequel, à l'aide d'une machine de coextrusion comprenant une extrudeuse amont et une extrudeuse aval débouchant dans une cavité d'extrusion formée par l'espace compris entre une paroi inférieure d'une tête d'extrusion et une paroi de profilage disposée en vis-à-vis de la paroi inférieure.

Ledit procédé met en oeuvre les étapes au cours desquelles :
- à l'aide de l'extrudeuse amont, on délivre, en amont d'une première lame de profilage, dite « lame de profilage amont », un premier mélange de caoutchouc qui débouche par un canal d'extrusion amont dans la paroi inférieure de la tête d'extrusion,
- on réalise un premier profilé, formé du premier mélange de caoutchouc, dans un entrefer amont qui est défini par la lame de profilage amont et la paroi de profilage, ledit premier profilé comprenant au moins un premier élément de profilé qui est destiné à former une sous-couche et au moins un second élément de profilé qui est destiné à former un insert longitudinal, dont une base est en continuité de matière avec ladite sous-couche, et qui forme sur ladite sous-couche une excroissance dont des parois latérales s'étendent vers l'extérieur par rapport à une surface externe dudit premier profilé,
- à l'aide de l'extrudeuse aval on délivre un second mélange de caoutchouc par un canal d'extrusion aval qui débouche dans la paroi inférieure de la tête d'extrusion en aval de la lame de profilage amont, et on met en joint, au niveau d'un raccordement du flux de second mélange de caoutchouc avec le flux de premier mélange de caoutchouc, le second mélange de caoutchouc avec la surface radialement externe du premier profilé,
- on fait passer le premier profilé et le second mélange de caoutchouc dans un entrefer aval qui est disposé en aval du canal d'extrusion aval et qui est défini par une seconde lame de profilage, dite « lame de profilage aval », et la paroi de profilage, afin de réaliser un profilé complexe formé du premier et du second mélange de caoutchouc

Ce procédé se caractérise en ce qu'on fait circuler une portion du premier mélange de caoutchouc, destinée à former l'insert, entre des parois d'un chenal qui s'étendent selon une direction longitudinale entre la lame de profilage amont et la lame de profilage aval, depuis une extrémité amont du chenal qui est située en amont du raccordement des flux des premier et second mélanges de caoutchouc jusqu'à une extrémité aval dudit chenal qui est située en aval dudit raccordement des flux et en amont de la lame de profilage aval, lesdites parois du chenal formant ensemble une surface concave ouverte vers l'intérieur de la cavité d'extrusion, et étant disposées de sorte que la portion du premier mélange de caoutchouc qui pénètre dans le chenal et qui est destinée à former l'insert, lorsqu'elle progresse longitudinalement dans le chenal, reste en continuité de matière avec la sous-couche sans être mise en contact avec le second mélange, et que la mise en joint d'une ou des parois latérales dudit insert avec le second mélange de caoutchouc s'effectue ensuite dans l'entrefer aval défini par la lame de profilage aval et la paroi de profilage.

Le premier mélange provenant de l'extrudeuse amont rentre donc sous pression dans le chenal et reste en continuité de matière avec le mélange formant la sous couche en raison de l'ouverture de la concavité du chenal du coté de ladite sous couche disposée radialement vers l'intérieur par rapport au chenal.

En sortant du deuxième canal d'extrusion alimenté par une seconde extrudeuse, le second mélange, vient se mettre en joint avec la surface radialement externe du premier profilé dans l'espace longitudinal situé entre la lame de profilage amont et la lame de profilage aval. Et la réunion de ces flux est susceptible d'engendrer des mouvements de matière importants au sein du second mélange dans des directions radiales ou transversales, en particulier lorsque le premier et le second mélange ont des rhéologies différentes.

Tout au long de sa progression longitudinale dans le chenal entre la sortie de la première lame de profilage et l'entrée de la seconde lame de profilage, la portion du premier mélange destinée à former l'insert n'est pas en contact avec le second mélange, de manière à éviter que le profil de l'insert ne soit déformé par le second mélange.

De ce fait, avantageusement, la mise en joint des parois latérales de l'insert avec le second mélange s'effectuer ensuite, uniquement, dans l'entrefer aval.

Ce procédé permet ainsi de protéger le profil de l'insert, dans la partie de la voute formée par la paroi inférieure et la paroi du rouleau située entre l'entrefer amont et l'entrefer aval, des effets liés à la mise en joint du premier profilé P1 avec le second mélange M2 et s'opérant dans la zone située entre les deux entrefers en créant des turbulences liées aux variations de pression.

Le procédé selon l'invention peut aussi comprendre isolément, ou en combinaison, les caractéristiques suivantes :
- On met en joint le second mélange avec chacune des parois latérales d'au moins un insert.
- On met en joint le second mélange avec une seule des parois latérales d'au moins un insert.
- Au cours de sa progression dans le chenal, la section de l'insert par un plan perpendiculaire à la direction longitudinale diminue entre la sortie de l'entrefer amont et l'entrée de l'entrefer aval.

- À l'entrée de l'entrefer aval, la section de l'insert par un plan perpendiculaire à la direction longitudinale est de forme triangulaire.
- En sortie de l'entrefer aval, un sommet externe de l'insert affleure au niveau de la surface externe du profilé complexe.
- On extrude un premier profilé ne présentant pas de discontinuité dans une direction transversale.
- La largeur hors-tout du premier profilé ne présentant pas de discontinuité, considérée selon la direction transversale, représente plus de la moitié, et plus préférentiellement au moins 70%, de la largeur hors-tout du profilé complexe PC obtenu.
- Les parois du chenal s'étendent depuis l'entrefer amont jusqu'à l'entrefer aval.
- La paroi de profilage peut être fixe ou,
- La paroi inférieure de la tête d'extrusion a une forme concave de profil cylindrique d'axe donné s'étendant transversalement, et dont une direction circonférentielle se confond avec la direction longitudinale définissant le sens de progression du profilé dans la machine et, la paroi de profilage est formée par un rouleau cylindrique, mobile en rotation autour d'un axe confondu avec l'axe de la paroi inférieure, dont une paroi radialement externe forme ladite paroi de profilage,
- la lame de profilage aval peut comprendre au moins une saillie pour former un sillon longitudinal dans le profilé complexe, tandis que l'insert est disposé à la frontière d'un bord latéral dudit sillon de sorte qu'une paroi latérale dudit insert forme le bord dudit sillon, et l'on peut, à l'aide d'une l'extrudeuse annexe, délivrer un troisième mélange de caoutchouc par un canal d'extrusion annexe qui débouche dans une partie amont de la saillie, ledit canal d'extrusion annexe comportant des ouïes de sortie disposées en bordure de ladite saillie et formant une ou des ouïes de sortie latérale et une ouïe de sortie inférieure, de manière à déposer dans le sillon du profilé complexe une gomme de bordure qui comprend une gomme de bordure de fond de sillon déposée sur le fond du sillon par l'ouïe de sortie inférieure et au moins une gomme de bordure latérale déposée sur la paroi latérale de l'insert par une ouïe de sortie latérale,
- on utilise, pour former la gomme de bordure, un troisième mélange de caoutchouc qui est de même composition que le second mélange de caoutchouc.

Ce procédé est également particulièrement bien adapté pour réaliser un profilé complexe servant de composant pour la réalisation d'un pneumatique et en particulier de la bande de roulement de ce pneumatique.

La mise en œuvre de ce procédé est rendu possible par l'utilisation d'une tête d'extrusion adaptée.

Cette tête d'extrusion d'un profilé complexe constitué de l'assemblage de profilés formés à partir de mélanges de caoutchouc distincts, est destinée à être montée sur une machine de coextrusion dans laquelle les profilés progressent dans une cavité d'extrusion selon un sens d'extrusion allant de l'amont vers l'aval en définissant une direction longitudinale, ladite tête d'extrusion comprenant une paroi inférieure délimitant en partie ladite cavité d'extrusion et, en progressant de l'amont vers l'aval de ladite paroi inférieure dans la direction longitudinale :
- un bloc d'extrusion amont comportant un canal d'extrusion amont, placé en sortie d'une extrudeuse amont, et débouchant dans la paroi inférieure,
- une lame de profilage amont, disposée transversalement en aval du canal d'extrusion amont pour déterminer un premier profil transversal d'un premier profilé,
- un bloc d'extrusion aval comportant un canal d'extrusion aval, placé en sortie d'une extrudeuse aval, et débouchant dans la paroi inférieure en aval de la lame de profilage amont,
- une lame de profilage aval disposée transversalement en aval du canal d'extrusion aval pour déterminer un profil transversal du profilé complexe,

La tête d'extrusion se caractérise en ce qu'elle comporte au moins un chenal, formé par des parois s'étendant dans la direction longitudinale entre la lame de profilage amont et la lame de profilage aval, en formant ensemble une surface concave ouverte vers l'intérieur de la cavité d'extrusion et en définissant un conduit ouvert à ses deux extrémités longitudinales.

Plus particulièrement, l'invention concerne une tête d'extrusion d'un profilé complexe constitué de l'assemblage de profilés formés à partir de mélanges de caoutchouc distincts, destinée à être montée sur une machine de coextrusion, et dans laquelle les profilés progressent dans une cavité d'extrusion selon un sens d'extrusion allant de l'amont vers l'aval en définissant une direction longitudinale, ladite tête d'extrusion comprenant une paroi inférieure qui délimite en partie ladite cavité d'extrusion et, en progressant de l'amont vers l'aval de ladite paroi inférieure dans la direction longitudinale :
- un bloc d'extrusion amont comportant un canal d'extrusion amont qui est placé en sortie d'une extrudeuse amont, et qui débouche dans la paroi inférieure afin de pouvoir délivrer un flux d'un premier mélange de caoutchouc,
- une lame de profilage amont, disposée transversalement en aval du canal d'extrusion amont pour déterminer un premier profil transversal d'un premier profilé formé à partir dudit flux de premier mélange de caoutchouc,

- un bloc d'extrusion aval comportant un canal d'extrusion aval qui est placé en sortie d'une extrudeuse aval, et qui débouche dans la paroi inférieure en aval de la lame de profilage amont, afin de pouvoir délivrer un flux d'un second mélange de caoutchouc et de mettre ledit flux de second mélange en joint avec le flux du premier mélange de caoutchouc au niveau d'une zone de raccordement de flux,
- une lame de profilage aval qui est disposée transversalement en aval du canal d'extrusion aval et de la zone de raccordement de flux, pour déterminer un profil transversal du profilé complexe formé à partir du premier et du second mélange de caoutchouc.

Cette tête d'extrusion peut être caractérisée en ce qu'elle comporte au moins un chenal, formé par des parois qui s'étendent selon la direction longitudinale entre la lame de profilage amont et la lame de profilage aval, depuis une extrémité amont du chenal qui est située en amont de la zone de raccordement des flux des premier et second mélanges de caoutchouc jusqu'à une extrémité aval dudit chenal qui est située en aval de ladite zone de raccordement des flux et en amont de la lame de profilage aval, lesdites parois du chenal formant ensemble une surface concave ouverte vers l'intérieur de la cavité d'extrusion, et étant disposées de sorte que, d'une part, une portion du flux du premier mélange de caoutchouc, destinée à former un insert dans le profilé complexe, puisse pénétrer dans le chenal et progresser longitudinalement dans ledit chenal sans être mise en contact avec le second mélange de caoutchouc, mais tout en restant en continuité de matière avec une sous-couche du premier profilé en premier mélange de caoutchouc, qui aura été mise en forme dans un entrefer amont défini par la lame de profilage amont, et que, d'autre part, une mise en joint d'une ou de parois latérales dudit insert avec le second mélange de caoutchouc s'effectue ensuite, dans un entrefer aval défini par la lame de profilage aval.

La tête d'extrusion selon l'invention peut aussi comprendre isolément, ou en combinaison, les caractéristiques suivantes :
- L'extrémité amont du chenal est disposée dans le prolongement d'un exutoire pratiqué dans la lame de profilage amont, et l'extrémité aval du chenal débouche en amont de la lame de profilage aval.
- Le conduit concave du chenal est formé d'une première et d'une deuxième paroi latérale, et d'une paroi constituant le fond du chenal.
- La première et la seconde paroi latérale d'un chenal sont supportées respectivement par une première et une deuxième cloison latérales dont l'épaisseur est inférieure à 2 mm et préférentiellement inférieure à 1 mm.
- Au niveau de l'extrémité aval du chenal, la paroi formant le fond du chenal est disposée au même niveau que la paroi de la lame de profilage aval.
- La section transversale d'un chenal par un plan perpendiculaire à la direction longitudinale décroît de manière continue en allant de l'extrémité amont vers l'extrémité aval du chenal de sorte que ladite section est minimale au niveau de l'extrémité aval du chenal.
- Au niveau de l'extrémité aval, la section transversale d'un chenal par un plan perpendiculaire à la direction longitudinale a une forme triangulaire.
- La lame de profilage aval comprend au moins une saillie s'étendant vers l'intérieur de la cavité d'extrusion et destinée à former un sillon longitudinal continu dans le profilé complexe.
- Au moins un chenal débouche entre deux saillies.
- Le canal d'extrusion aval comprend au moins un élément séparateur, s'étendant longitudinalement entre la lame de profilage amont et la lame de profilage aval, dans le prolongement longitudinal d'une saillie et divisant le canal d'extrusion aval en sous-canaux.
- Au moins un chenal comprend une paroi latérale confondue avec la paroi latérale d'un élément séparateur.
- Au niveau de la lame de profilage aval, la paroi interne de l'élément séparateur est disposée au même niveau que la paroi interne de la saillie située dans son prolongement.

Selon une caractéristique préférentielle qui peut constituer une invention à part entière, seule ou en combinaison avec les caractéristiques susmentionnées, l'invention peut porter sur une tête d'extrusion d'un profilé complexe constitué de l'assemblage de plusieurs profilés formés à partir de mélanges de caoutchouc distincts, est destinée à être montée sur une machine de coextrusion dans laquelle les profilés progressent dans une cavité d'extrusion selon un sens d'extrusion de l'amont vers l'aval en définissant une direction longitudinale, ladite tête comprenant une paroi inférieure délimitant pour partie ladite cavité d'extrusion et un bloc d'extrusion aval comportant une lame de profilage aval disposée selon une direction transversale pour déterminer un profil transversal du profilé complexe formé de l'assemblage de l'ensemble des profilés, ladite lame de profilage aval comprenant au moins une saillie destinée à former un sillon dans le profilé complexe ladite tête d'extrusion se caractérisant en ce qu'elle comporte au moins un canal d'extrusion annexe placé en sortie d'une extrudeuse annexe et débouchant dans une partie amont de la saillie, ledit canal d'extrusion annexe comportant une ouïe de sortie inférieure et au moins une ouïe de sortie latérale, ouvertes en bordure respectivement d'une paroi inférieure de ladite saillie et d'au moins une paroi latérale de ladite saillie.

Les ouïes latérales du canal d'extrusion annexe forment des ouvertures par lesquelles le mélange provenant de l'extrudeuse annexe est extrudé pour former une gomme de bordure sur le fond du sillon et sur au moins une des parois latérales du sillon. Comme on le verra par la suite, l'épaisseur de cette gomme de bordure peut être ajustée en réglant la position des cloisons supportant les parois définissant le canal d'extrusion annexe et en modifiant la section de sortie des ouïes latérales.

La disposition particulière du canal d'extrusion annexe qui est disposé dans la lame de profilage aval juste en amont de la saillie, permet d'éviter que le profil de la gomme de bordure dont l'épaisseur est relativement faible soit altéré lors de la mise en joint avec les gommes ou avec les profilés provenant de l'amont de la machine et dont l'assemblage dans l'entrefer formé par la lame de profilage aval est destiné à former le profilé complexe final.

La tête d'extrusion selon l'invention peut aussi comprendre, isolément ou en combinaison, les caractéristiques suivantes :
- Le canal d'extrusion annexe comprend au moins une paroi latérale distante latéralement de la paroi latérale de la saillie d'une valeur d, de sorte que l'ouverture entre ces deux parois définit une ouïe de sortie latérale.
- Le canal d'extrusion annexe comprend une paroi amont sensiblement perpendiculaire à la direction longitudinale, dans laquelle un plan, passant par un bord inférieur de la paroi amont et de la paroi latérale du canal d'extrusion annexe, est disposé à une distance inférieure d'une valeur e par rapport à la position d'une paroi inférieure de la saillie, de sorte que l'ouverture entre ce plan et la paroi inférieure de la saillie définit une ouïe de sortie inférieure.
- La tête d'extrusion comprend en outre, en progressant dans la direction longitudinale de l'amont vers l'aval,
   ∘ un bloc d'extrusion amont comprenant un canal d'extrusion amont placé en sortie d'une extrudeuse amont et débouchant dans la paroi inférieure en amont d'une lame de profilage amont.
   ∘ un bloc d'extrusion aval comprenant un canal d'extrusion aval placé en sortie d'une extrudeuse aval et débouchant dans ladite paroi inférieure en aval de la lame de profilage amont et en amont de la lame de profilage aval,
- Le canal d'extrusion aval comprend des éléments séparateurs, s'étendant longitudinalement entre la lame de profilage amont et la lame de profilage aval dans le prolongement longitudinal des saillies de la lame de profilage aval, et divisant ledit canal d'extrusion aval en sous- canaux.

Bien entendu, on pourra avantageusement combiner, au sein d'une tête d'extrusion, d'une part un ou des chenaux tels que décrits ci-dessus, destinés à conformer un ou des inserts correspondants à partir du premier mélange et à éviter que ces inserts ne soient déformés par le second mélange, et d'autre part des ouïes permettant de former une gomme de bordure qui recouvre notamment au moins une paroi latérale d'un tel insert.

Grâce à une telle combinaison, on pourra en particulier avantageusement d'une part créer au moins un insert placé en bordure d'un sillon longitudinal du profilé complexe afin de renforcer et rigidifier transversalement des blocs de structure de la bande de roulement comme indiqué plus haut, et d'autre part recouvrir d'une fine couche de gomme de bordure la paroi latérale dudit insert qui borde le sillon longitudinal.

De préférence, la gomme de bordure recouvrant la paroi latérale de l'insert bordant le sillon sera de même composition que le second mélange constitutif des blocs de structure de la bande de roulement, ce qui permettra avantageusement d'obtenir une composition homogène de la bande de roulement, et notamment des parois qui délimitent ledit sillon longitudinal et des blocs de structure de ladite bande de roulement, tout en conservant le bénéfice du maintien transversal des blocs de structure procuré par ledit insert.

Une telle homogénéité chimique des parois du sillon permettra notamment d'intégrer aisément dans ledit sillon des structures de types lamelles flexibles ou chicanes, qui sont destinées à freiner la propagation dans le sillon des bruits d'air lié au roulage sans pour autant gêner l'écoulement de l'eau sur chaussée humide ; en effet, les parois du sillon étant toutes de même composition, on pourra avantageusement réaliser des jeux de lamelles qui seront fixées chacune à une paroi du sillon différente sans qu'il soit nécessaire d'adapter le procédé de fixation en fonction de la composition de la paroi concernée.

De fait, la tête d'extrusion selon l'invention pourra présenter, isolément, ou en combinaison entre elles ou avec l'une ou l'autre des caractéristiques susmentionnées, les caractéristiques suivantes :
- La tête d'extrusion comporte un ou plusieurs chenaux formés
   ∘ d'une paroi latérale,
   ∘ d'une paroi latérale placée en vis-à-vis de la précédente et formée par une paroi latérale d'un élément séparateur, et
   ∘ d'une paroi formant le fond du chenal,
   lesdites parois s'étendant dans la direction longitudinale entre la lame de profilage amont et la lame de profilage aval en formant ensemble une surface concave continue ouverte radialement vers l'intérieur de la cavité et en définissant un conduit ouvert à ses deux extrémités longitudinales.
- Une extrémité aval du chenal débouche à l'entrée de la lame de profilage aval, et une extrémité amont du chenal est disposée en sortie de la lame de profilage amont dans le prolongement d'un exutoire pratiqué dans ladite lame de profilage amont.
- La paroi latérale du chenal est supportée par une cloison latérale d'une épaisseur inférieure à 2mm et préférentiellement inférieure à 1mm.
- Au niveau de l'extrémité aval, la paroi formant le fond du chenal est disposée au même niveau que la paroi de la lame de profilage aval.
- La section transversale d'un chenal par un plan perpendiculaire à la direction longitudinale décroît de manière continue en allant de l'extrémité amont du chenal vers l'extrémité aval du chenal de sorte que ladite section du chenal est minimale au niveau de ladite extrémité aval.
- Au niveau de l'extrémité aval, la section transversale d'un chenal par un plan perpendiculaire à la direction longitudinale a une forme sensiblement triangulaire.

Plus spécifiquement, en sus de l'agencement de chenal (ou de chenaux) susmentionné, la tête d'extrusion pourra comprendre, isolément ou en combinaison avec l'une et/ou l'autre des caractéristiques décrites ci-dessus, une lame de profilage aval qui comprend au moins une saillie pour former un sillon longitudinal dans le profilé complexe, et un chenal qui est agencé de manière à disposer l'insert à la frontière d'un bord latéral dudit sillon de sorte qu'une paroi latérale dudit insert forme le bord dudit sillon, tandis que le canal d'extrusion annexe comporte des ouïes de sortie disposées en bordure de ladite saillie, en amont de ladite saillie, et formant une ou des ouïes de sortie latérales et une ouïe de sortie inférieure, de manière à pouvoir déposer dans le sillon du profilé complexe une gomme de bordure qui comprend une gomme de bordure de fond de sillon déposée sur le fond du sillon par l'ouïe de sortie inférieure et au moins une gomme de bordure latérale déposée sur la paroi latérale de l'insert par une ouïe de sortie latérale.

L'invention intéresse également une machine de coextrusion d'un profilé constitué de l'assemblage de profilés formés à partir de mélanges de caoutchouc distincts, comprenant :
- une tête d'extrusion selon l'une quelconque des caractéristiques ci-dessus,
- une paroi de profilage disposée en vis-à-vis de la paroi inférieure de la tête d'extrusion et formant un entrefer avec les lames de profilage amont et aval pour l'extrusion des profilés formant le profilé complexe.

La paroi de profilage peut être fixe ou, alternativement, la paroi inférieure de la tête d'extrusion a une forme concave de profil cylindrique d'axe donné s'étendant transversalement, et dont une direction circonférentielle se confond avec la direction longitudinale définissant le sens de progression du profilé dans la cavité d'extrusion et la paroi de profilage est formée par la paroi radialement externe d'un rouleau cylindrique, mobile en rotation autour d'un axe confondu avec l'axe de la paroi inférieure.

L'invention sera mieux comprise à la lecture des figures annexées, qui sont fournies à titre d'exemples et ne présentent aucun caractère limitatif, dans lesquelles :
- La figure 1 représente le profil transversal d'un profilé complexe selon l'art antérieur connu.
- La figure 2 est une vue dans la direction transversale d'une machine d'extrusion selon l'invention.
- La figure 3 est une vue en coupe selon un plan perpendiculaire à la direction longitudinale d'un profilé complexe réalisé à l'aide d'une tête d'extrusion selon une première forme de réalisation de l'invention.
- La figure 4 est une vue en coupe selon un plan perpendiculaire à la direction longitudinale d'un profilé complexe réalisé à l'aide d'une tête d'extrusion selon une seconde forme de réalisation de l'invention.
- La figure 5 est une vue schématique en perspective de la tête d'extrusion selon la première forme de réalisation de l'invention.
- La figure 6 est une vue de détail de la partie de la tête d'extrusion inscrite dans le médaillon de la figure 5.
- La figure 7 est une vue schématique en perspective de la tête d'extrusion selon la seconde forme de réalisation de l'invention.
- La figure 8 est une vue de détail de la partie de la tête d'extrusion inscrite dans le médaillon de la figure 7.
- La figure 9 est une vue dans la direction transversale d'une variante de machine d'extrusion pouvant être utilisée pour mettre en oeuvre l'invention.
- La figure 10 est une vue en coupe selon un plan perpendiculaire à la direction longitudinale d'un profilé complexe réalisé à l'aide d'une tête d'extrusion selon une troisième forme de réalisation, où l'on utilise des ouïes pour déposer une gomme de bordure sur les parois de sillons.
- La figure 11 est une vue en coupe selon un plan perpendiculaire à la direction longitudinale d'un profilé complexe réalisé à l'aide d'une tête d'extrusion selon une quatrième forme de réalisation de l'invention.
- La figure 12 est une vue schématique en perspective d'une tête d'extrusion selon la troisième forme de réalisation susmentionnée.
- La figure 13 est une vue de détail de la partie de la tête d'extrusion inscrite dans le médaillon de la figure 12.
- Les figures 14 et 15 sont des vues de détail de la tête d'extrusion inscrites dans les médaillons de la figure 13 et permettant de visualiser les ouïes de sortie du canal d'extrusion annexe.
- La figure 16 est une vue schématique en perspective de la tête d'extrusion selon la quatrième forme de réalisation de l'invention.
- La figure 17 est une vue de détail de la partie de la tête d'extrusion inscrite dans le médaillon de la figure 16.

Dans une forme préférée d'exécution de l'invention, servant de base à la présente description, la machine de coextrusion représentée à la figure 2 comprend un rouleau cylindrique 10 entraîné en rotation autour d'un axe 12 par un ensemble moteur (non représenté). Les génératrices du rouleau s'étendent selon une direction transversale DT et forment une paroi d'extrusion définie ici par la paroi radialement externe 11 du rouleau 10.

La tête d'extrusion 2 comprend un bloc d'extrusion amont 3 qui est associé à une extrudeuse 30 fournissant un premier mélange M1, et un bloc d'extrusion aval 4 qui est associé à une extrudeuse aval 40 fournissant un second mélange M2.

De préférence, l'invention s'applique à des mélanges M1, M2 à base de caoutchouc, et notamment à base de caoutchouc dit « cru » c'est-à-dire non vulcanisé, si bien que l'on fera de préférence référence à des « mélanges de caoutchouc » dans ce qui suit.

Ceci étant, dans l'absolu, l'invention pourrait bien entendu trouver à s'appliquer à d'autres types de premier et second mélanges M1, M2, et notamment à tous mélanges de polymères appropriés, éventuellement autres que des mélanges à base de caoutchouc.

Dans ce qui suit, par commodité de description, on pourra faire indifféremment référence à des « mélanges » ou à des « mélanges de caoutchouc ».

La paroi inférieure radialement interne 20 de la tête d'extrusion 2 a une forme générale cylindrique d'axe 12 qui est placée en vis-à-vis de la paroi radialement externe 11 du rouleau 10. L'espace compris entre la paroi inférieure et la paroi radialement externe du rouleau forme une voute ou encore une cavité d'extrusion dans laquelle le mélange sous pression est mis en forme en passant dans les entrefers, ici un entrefer amont défini par la paroi radialement externe 11 du rouleau 10 et par une lame de profilage amont 32 et, respectivement, un entrefer aval défini par la paroi radialement externe 11 du rouleau 10 et par une lame de profilage aval 42, lesdites lames de profilage amont 32 et aval 42 faisant partie intégrante de la tête d'extrusion.

La distance radiale entre la paroi inférieure de la tête d'extrusion 2 et la paroi radialement externe du rouleau 10 au niveau des deux extrémités transversales est de l'ordre de quelques dixièmes de millimètres pour limiter les fuites de mélange de caoutchouc.

Le rouleau 10 permet un meilleur entraînement du profilé complexe en cours d'extrusion dans la direction longitudinale DL, et permet en particulier de réduire les effets de bord au niveau de la semelle du profilé complexe en contact avec la paroi radialement externe 11 du rouleau.

Le profilé complexe PC est dirigé dans la direction longitudinale DL vers la partie aval de la machine d'extrusion sur un tapis 13.

De manière alternative, il est tout à fait possible de mettre en oeuvre l'invention à l'aide d'une machine de coextrusion, dite à nez plat, dans laquelle la paroi d'extrusion définissant les entrefers avec les lames de profilage amont et aval et faisant face à la paroi inférieure de la tête d'extrusion est fixe.

Pour la clarté de l'exposé qui suit, il sera fait référence à ce mode alternatif autant que nécessaire, en considérant que, dans la plupart des cas, ce qui sera évoqué pour une machine d'extrusion comportant un rouleau s'applique mutatis mutandis pour une machine d'extrusion à nez plat.

Le sens de rotation R du rouleau détermine le sens de progression du profilé dans la cavité d'extrusion de la machine, lequel est assimilé à la direction longitudinale DL. La direction radiale DR correspond donc à une direction localement perpendiculaire à la direction transversale DT et à la direction longitudinale DL, et le sens radialement dirigé vers l'intérieur ou radialement interne correspond à une orientation vers l'intérieur de la cavité d'extrusion. Ainsi, lorsqu'un premier point est placé dans une position radialement inférieure par rapport à un second point, on entend que la valeur de la distance entre le premier point et le second point selon une direction perpendiculaire à la direction longitudinale et à la direction transversale et orientée selon un sens allant du centre de la cavité vers l'extérieur est positive. De même, et dans la même logique, sont considérés comme équivalents les termes « inférieur » et « radialement inférieur », les termes « supérieur » ou « radialement supérieur », les termes « externe » ou « radialement externe », ou encore les termes « interne » ou « radialement interne ».

La figure 3 représente un premier profilé complexe PC1 comprenant un premier profilé P1 constitué d'un premier mélange M1 destiné à former une première couche, radialement interne, et un second profilé P2 constitué d'un second mélange M2 destiné à former, radialement par-dessus la première couche formée par le premier profilé P1, une bande de roulement.

Le profil de la bande de roulement comprend des rainures longitudinales P20, préfigurant les sillons du pneumatique, lesdites rainures longitudinales P20 étant intercalées entre des cordons longitudinaux P21 destinés à former des blocs de structure de la bande de roulement.

Par commodité de description, on pourra assimiler les rainures longitudinales P20 aux sillons longitudinaux que lesdites rainures préfigurent.

Le profilé complexe PC1 comprend également des inserts longitudinaux P10 qui sont constitués du premier mélange M1, qui présentent ici une forme générale triangulaire, et qui s'élèvent dans la direction radiale DR depuis une base fictive P13 située sur la face radialement externe d'une sous couche P14 réalisée dans ce même premier mélange M1. Ici, lesdits inserts P10 s'élèvent jusqu'à la surface radialement externe du second profilé P2.

Par simple commodité de description, on pourra opérer fictivement une distinction en considérant que le premier profilé P1 comprend d'une part un premier élément de profilé qui est destiné à former une sous-couche P14, et d'autre part un second élément de profilé (respectivement plusieurs seconds éléments de profilé) destiné(s) à former un insert P10 (respectivement plusieurs inserts P10), bien que ces éléments, insert P10 et sous-couche 14, soient en pratique de préférence formés d'un seul tenant l'un avec l'autre.

Ces inserts longitudinaux P10 sont disposés entre deux rainures longitudinales, ici sensiblement au centre d'un cordon longitudinal P21, de sorte que la première paroi latérale P11 de l'insert et la seconde paroi latérale P12 de l'insert sont mises en joint avec le mélange M2 formant la bande de roulement.

Le profilé complexe PC2 représenté à la figure 4 se distingue du profilé complexe PC1 en ce que les inserts P10 sont disposés en bordure d'un cordon longitudinal P21 à la frontière entre le cordon longitudinal P21 et le sillon longitudinal P20.

Seule la première paroi latérale P11 ou la seconde paroi latérale P12 d'un insert est alors mise en joint avec le mélange M2.

On observe que le fond du sillon P20 du profilé complexe PC2 peut être ici formé par le premier mélange M1 de la sous-couche P14.

Il va de soi que les caractéristiques distinctives de ces deux profilés complexes PC1 et PC2 peuvent être combinées pour former un profilé complexe comprenant simultanément des inserts disposés dans la partie centrale d'un cordon et des inserts disposés en bordure d'un cordon, chacun de ces inserts étant constitués du même premier mélange M1 que celui de la sous-couche P14.

La tête d'extrusion selon l'invention a été mise au point pour permettre la réalisation des profilés complexes du type de ceux représentés aux figures 3 et 4. Elle autorise toutefois la fabrication, comme on le verra par la suite, de nombreuses formes d'insert alternatives.

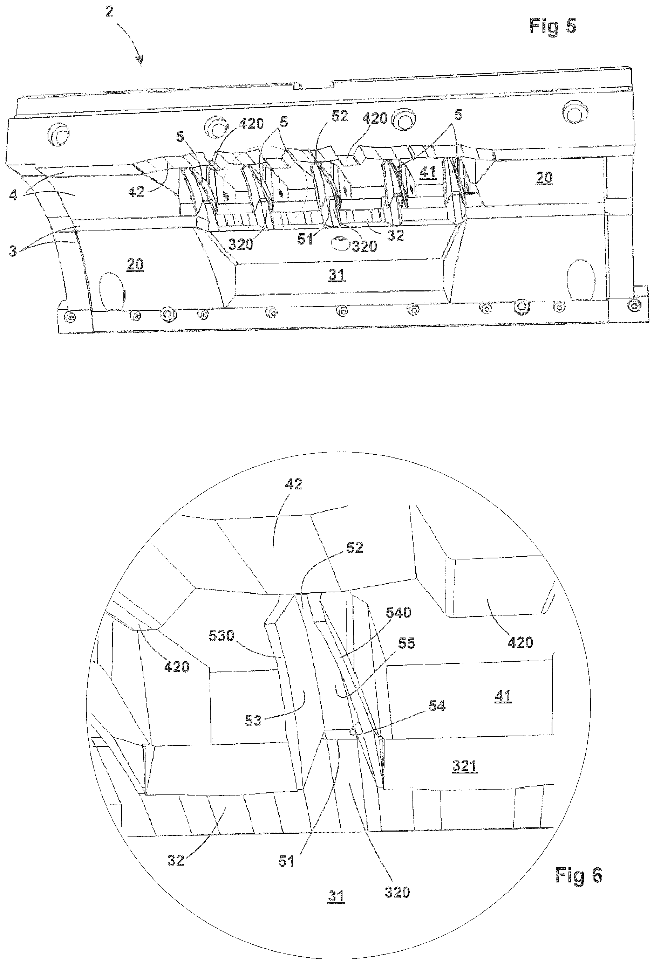

Les figures 5 et 6 permettent de visualiser la tête de d'extrusion 2 vue du côté de la paroi inférieure 20, selon une première forme de réalisation de l'invention.

L'extrudeuse amont (non représentée), dans laquelle est travaillé le premier mélange M1, débouche dans la paroi inférieure 20 par un canal d'extrusion amont 31, en amont (dans le sens de la direction longitudinale DL) d'une première lame de profilage 32, dite « lame de profilage amont 32 ».

Cette lame de profilage amont 32, dont le profil transversal est adapté pour mettre en forme le premier profilé P1 destiné à former la sous-couche P14, définit un entrefer, dit « entrefer amont », avec la paroi radialement externe 11 du rouleau 10. Le profilé P1, est de préférence du type de celui représenté à la figure 3, et s'étend préférentiellement de manière continue dans la direction transversale DT.

L'extrudeuse aval 40 (non représentée), dans laquelle est travaillé le mélange M2, débouche par un canal d'extrusion aval 41 dans la paroi intérieure 20, en aval de la lame de profilage amont 32 et en amont d'une seconde lame de profilage 42, dite « lame de profilage aval 42 ».

Le flux de mélange M2 provenant du canal d'extrusion aval 41 entre donc en contact avec la partie radialement externe du premier profilé P1 formant la sous-couche P14, ici plus particulièrement avec la surface radialement externe de ladite sous-couche P14, dès sa sortie du canal d'extrusion aval 41 directement en aval de la lame de profilage amont 32 et bien en amont de la lame de profilage aval 42. Le raccordement de ces deux flux peut être une source de turbulence susceptible de modifier le profil du premier profilé P1, et notamment de la sous couche P14,, ce qui nécessite une adaptation en conséquence du profil transversal de la lame de profilage amont 32.

L'entrefer entre la lame de profilage aval 42 et la surface radialement externe 11 du rouleau 10 sert à déterminer le profil transversal du second profilé P2 et à parfaire la mise en joint des profilés P1 et P2 pour obtenir le profilé complexe PC, PC1.

Ainsi, on retrouve bien, d'amont en aval :
- un bloc d'extrusion amont 3 comportant un canal d'extrusion amont 31 qui est placé en sortie d'une extrudeuse amont 30, et qui débouche dans la paroi inférieure 20 afin de pouvoir délivrer un flux d'un premier mélange de caoutchouc M1,
- une lame de profilage amont 32, disposée transversalement en aval du canal d'extrusion amont 31 pour déterminer un premier profil transversal d'un premier profilé P1 formé à partir dudit flux de premier mélange de caoutchouc M1,
- un bloc d'extrusion aval 4 comportant un canal d'extrusion aval 41 qui est placé en sortie d'une extrudeuse aval 40, et qui débouche dans la paroi inférieure 20 en aval de la lame de profilage amont 32, afin de pouvoir délivrer un flux d'un second mélange de caoutchouc M2 et de mettre ledit flux de second mélange en joint avec le flux du premier mélange de caoutchouc M1 au niveau d'une zone de raccordement de flux, et
- une lame de profilage aval 42 qui est disposée transversalement en aval du canal d'extrusion aval 41 et de la zone de raccordement de flux, pour déterminer un profil transversal du profilé complexe PC formé à partir du premier et du second mélange de caoutchouc M1, M2.

En outre, afin d'éviter que le flux du second mélange M2 ne déforme le ou les inserts P10 dans la zone de raccordement des flux, la tête d'extrusion 2 est avantageusement pourvu d'au moins un chenal 5, et de préférence de plusieurs chenaux 5, préférentiellement d'autant de chenaux 5 qu'il y a d'inserts P10, qui, tel que cela sera détaillé ci-dessous, vont former des conduits de dérivation qui captent (chacun) une partie du premier mélange M1 destinée à former l'insert P10 considéré, et qui transportent cette partie du premier mélange M1 en le séparant, au moins temporairement, sur une partie de son trajet longitudinal entre les lames de profilage amont 32 et aval 42, du second mélange M2, pour permettre à ladite partie du premier mélange M1 destinée à former l'insert P10 de contourner la zone de raccordement sans entrer en contact avec le second mélange M2, mais tout en restant en continuité de matière avec la sous-couche P14, et de n'entrer au contact du second mélange M2 qu'ensuite, dans l'entrefer aval situé au-delà de ladite zone de raccordement, suffisamment en aval de ladite zone de raccordement.

A cet effet, la tête d'extrusion 2 comporte de préférence au moins un chenal 5, formé par des parois 53, 54, 55 qui s'étendent selon la direction longitudinale DL entre la lame de profilage amont 32 et la lame de profilage aval 42, depuis une extrémité amont 51 du chenal 5 qui est située en amont de la zone de raccordement des flux des premier et second mélanges de caoutchouc M1, M2 jusqu'à une extrémité aval 52 dudit chenal 5 qui est située en aval de ladite zone de raccordement des flux et en amont de la lame de profilage aval 42.

Lesdites parois 53, 54, 55 du chenal forment ensemble une surface concave ouverte vers l'intérieur de la cavité d'extrusion, et sont disposées de sorte que :
- d'une part, une portion du flux du premier mélange de caoutchouc M1, destinée à former un insert P10 dans le profilé complexe PC, puisse pénétrer dans le chenal 5 et progresser longitudinalement dans ledit chenal 5 sans être mise en contact avec le second mélange de caoutchouc M2, mais tout en restant en continuité de matière avec la sous-couche P14 du premier profilé P1, laquelle sous-couche P14 aura été mise en forme dans l'entrefer amont défini par la lame de profilage amont 32,
- et que, d'autre part, une mise en joint d'une ou de parois latérales P11, P12 dudit insert P10 avec le second mélange de caoutchouc M2 s'effectue (seulement) ensuite, dans un entrefer aval défini par la lame de profilage aval 42.

Avantageusement, l'invention permet donc de créer successivement une première confluence (un premier raccordement de flux) entre le premier mélange M1 et le second mélange M2, première confluence au niveau de laquelle le second mélange M2 entre en premier contact avec le premier mélange M1, et plus particulièrement en contact avec la sous-couche P14 formant un premier élément du premier profilé P1, puis une seconde confluence (un second raccordement de flux), distincte, qui est déportée vers l'aval par rapport à la première confluence, et au niveau de laquelle ce même second mélange M2 entre en (second) contact avec des seconds éléments de ce même premier profilé P1, en l'occurrence avec le ou les inserts P10 concernés, qui étaient, jusqu'à cette seconde confluence, encore non exposés, car protégés par leur chenaux 5 respectifs qui les séparait dudit second mélange M2.

De préférence, les parois 53, 54, 55 du chenal 5 peuvent s'étendre depuis l'entrefer amont jusqu'à l'entrefer aval, en couvrant ainsi sensiblement toute la distance qui sépare longitudinalement la lame de profilage amont 32 de la lame de profilage aval 42. On obtiendra ainsi une protection aussi durable que possible, et donc aussi efficace que possible, des inserts P10 vis-à-vis du second mélange M2.

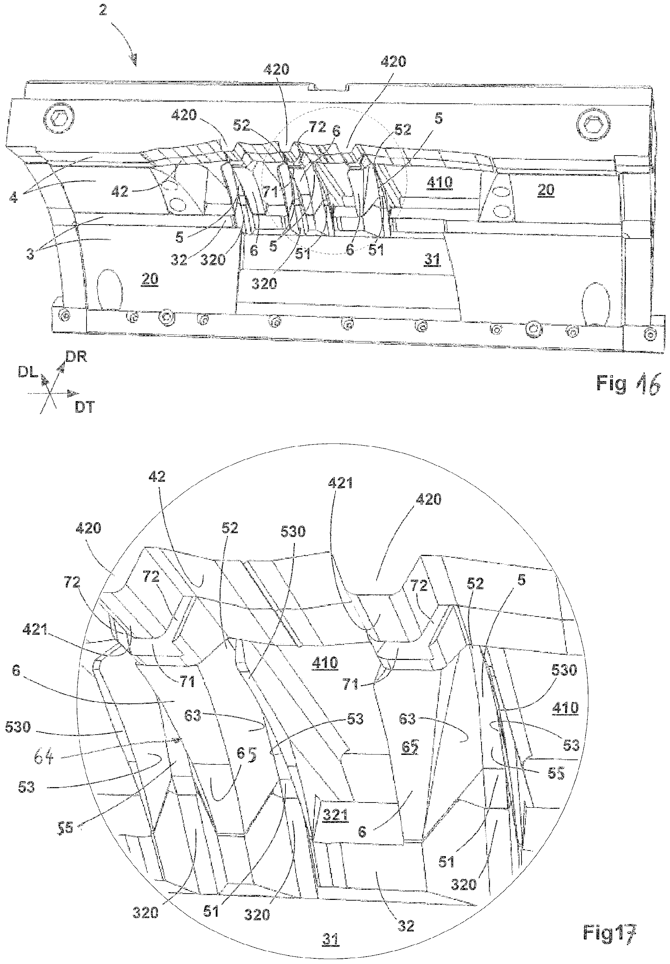

De préférence, tel que cela est illustré sur les figures 5, 6, 7 et 8, ou encore sur les figures 16 et 17,la tête d'extrusion 2, comprend au moins un chenal 5 qui s'étend dans la direction longitudinale DL et dont une extrémité amont 51 est disposée dans le prolongement d'un exutoire 320 pratiqué dans la lame de profilage amont 32 et dont l'extrémité aval 52 débouche juste en amont de la lame de profilage aval 42 dans l'entrefer défini par lame de profilage aval 42 et la surface radialement externe 11 du rouleau 10.

Un chenal 5 peut se présenter sous la forme d'un canal, de préférence de section sensiblement triangulaire ou trapézoïdale, comprenant une première paroi latérale 53 supportée par une première cloison 530, une seconde paroi latérale 54 supportée par une deuxième cloison 540, et une paroi 55 formant le fond du chenal.

Les parois 53, 54 et 55 forment ensemble une surface concave continue, ouverte radialement vers l'intérieur et dont la concavité fait face à la paroi radialement externe 11 du rouleau 10.

Les parois 53, 54 et 55 du chenal 5 définissent en quelque sorte un conduit, à l'image d'une gouttière ou d'une coque renversée ouverte à ses deux extrémités amont 51 et aval 52.

Au niveau de l'extrémité amont 51 du chenal 5, la cloison 530 est de préférence raccordée avec le flanc aval 321 de la lame de profilage amont 32, et le bord radialement inférieur de la cloison 530 affleure avec le profil de la lame de profilage amont 32. La lame de profilage amont 32 présente, au niveau de cette extrémité amont 51 du chenal 5, un profil transversal en forme d'exutoire 320, dont la partie aval est disposée en continuité de la paroi 55 formant le fond du chenal, de manière à favoriser l'écoulement du mélange M1 dans le chenal 5.

Au niveau de l'extrémité aval 52 du chenal 5, le chenal 5 s'ouvre directement dans l'entrefer formé par la lame de profilage aval 42 et la paroi radialement externe 11 du rouleau 10. Le chenal 5, illustré dans les figures 5 et 6, et le cas échéant sur les figures 16 et 17, est configuré de sorte que la paroi 55 formant le fond du chenal 5 est disposée radialement au même niveau que la position radiale à ce niveau de la lame de profilage aval 42. En revanche, au niveau de cette extrémité aval 52, les cloisons 530 et 540 supportant les parois latérales 53 et 54 du chenal 5 s'étendent radialement vers l'intérieur à une position radiale inférieure à la position de la lame de profilage aval 42.

Toutefois, s'il n'est pas nécessaire de faire émerger l'insert P10 au niveau de la surface de la bande de roulement; il est tout à fait possible, au niveau de l'extrémité aval 52 du chenal 5, de disposer la paroi 55 formant le fond du chenal 5 à une position radialement inférieure à celle de la position radiale de la lame de profilage aval 42.

Ainsi, tout en restant en continuité de matière avec le mélange M1 formant la sous-couche P14, la partie de mélange M1 qui pénètre dans le chenal 5 s'écoule directement depuis l'extrémité amont 51 jusqu'à l'extrémité aval 52 sans être mise en contact avec le mélange M2, de sorte que les adaptations de pression observées au niveau du raccordement du flux de mélange M2 avec le flux de mélange M1, n'entraînent aucune perturbation du profil conféré au mélange M1 ayant pénétré dans le chenal 5 et destiné à former l'insert P10.

La mise en forme de l'insert P10 se fait tout au long de la progression du mélange M1 dans le chenal 5, et le profil selon un plan radial passant par l'extrémité aval du chenal 5 correspond au profil de l'insert P10 du profilé complexe PC. La mise en joint des parois latérales P11 et P12 de l'insert avec le mélange M2 formant la bande de roulement se fait alors directement dans l'entrefer aval défini par la lame de profilage aval 42 et la paroi radialement externe 11 du rouleau, sans que le profil de l'insert ne soit modifié.

L'évolution de la pression dans le chenal 5 peut être contrôlée en ajustant l'angle formée par les parois latérales 53 et 54 par rapport à la direction longitudinale DL. Ces deux parois convergent l'une vers l'autre allant de l'amont vers l'aval, par exemple en faisant un angle de l'ordre de 5° avec la direction longitudinale, de sorte que la section transversale du chenal par un plan radial ou par un plan perpendiculaire à la direction longitudinale décroît de manière continue en allant de l'extrémité amont 51 vers l'extrémité aval 52 du chenal, et que ladite section est minimale au niveau de l'extrémité aval 52.

Dans le cas illustré aux figures 5 et 6, la section du chenal au niveau de l'extrémité aval 52 a une forme sensiblement triangulaire correspondant à une forme préférentielle de réalisation de l'insert. Toutefois, la forme de cette section n'est pas limitative et peut être adaptée à volonté.

Selon cette première forme de réalisation de l'invention, les chenaux 5 illustrés par les figures 5 et 6 débouchent entre deux saillies 420 de la lame de profilage aval 42. Les saillies 420 ont pour objet de former les sillons P20 du profilé complexe illustré à la figure 3. Il résulte de cette disposition que l'insert P10 est disposé sensiblement au centre du cordon longitudinal P21.

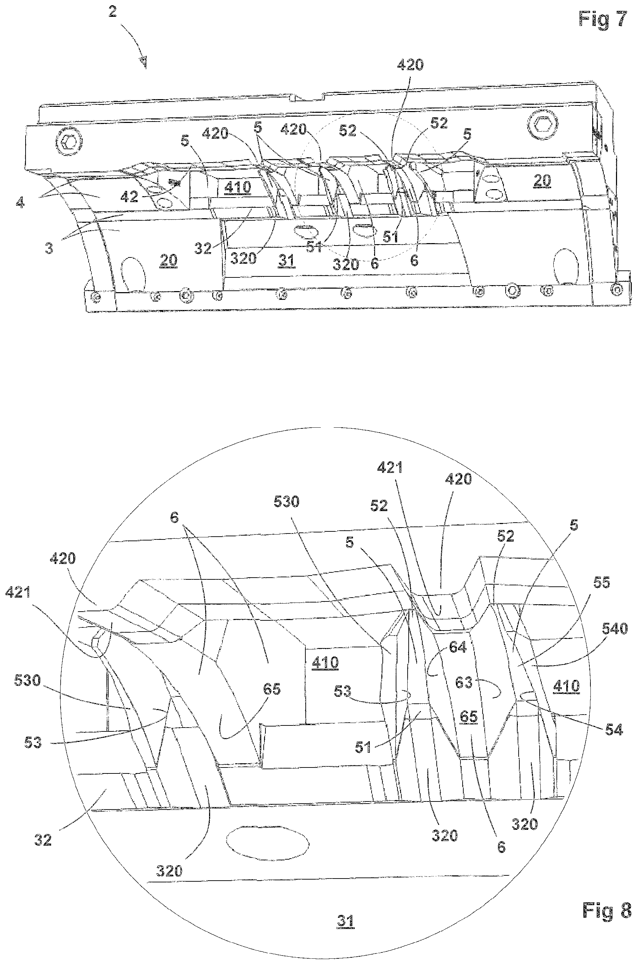

Les figures 7 et 8 illustrent une deuxième forme de réalisation de l'invention permettant de réaliser un profilé complexe du type de celui représenté à la figure 4, et dans lequel on cherche à positionner les inserts P10 à une frontière entre le cordon longitudinal P21 et le sillon P20.

La tête de profilage comprend alors au moins un élément séparateur 6, entre la lame de profilage amont et la lame de profilage aval 42, disposé dans le prolongement longitudinal d'une saillie 420 de la lame de profilage aval 42 et s'étendant depuis la lame de profilage amont 32 jusqu'à la lame de profilage aval 42. Cet élément séparateur 6 divise ledit second canal d'extrusion 41 en sous-canaux 410.

La paroi latérale d'un ou plusieurs chenaux 5 est alors confondue avec la paroi latérale 63, 64 d'un élément séparateur 6, et les dispositions respectives des parois formant le chenal 5 par rapport à la première 32 et à la seconde 42 lame de profilage, et décrites ci-dessus pour le premier mode de réalisation de l'invention, s'appliquent mutatis mutandis.

Au niveau de la saillie 420 de la lame de profilage aval 42, la paroi radialement interne 421 de la saillie, est placée à la même position radiale que la paroi radialement interne 65 de l'élément séparateur 6. Cette paroi 65 se prolonge en aval de ladite saillie 420 et, au niveau de son raccordement avec la lame de profilage amont 32, occupe la même position radiale que la paroi de la lame de profilage amont 32.

Il résulte de ce qui précède, que les différentes formes de mise en oeuvre de l'invention, peuvent faire l'objet de nombreuses combinaisons sans pour autant se départir de l'esprit de l'invention.

De même, on considèrera qu'une machine de coextrusion d'un profilé constitué de l'assemblage de profilés formés à partir de mélanges de caoutchouc distincts, comprenant un rouleau cylindrique et une tête d'extrusion selon l'invention entre dans le domaine de protection de la présente demande.

Pour reproduire le profilé complexe PC1 tel qu'illustré à la figure 3, on met en joint le second mélange M2 avec chacune des parois latérales, P11 et P12, d'au moins un insert P10.

Et pour reproduire un profilé complexe PC2 tel qu'illustré à la figure 4, on met en joint le second mélange M2 avec une seule paroi latérale, P11 ou P12, d'au moins un insert.

Pour obtenir une meilleure mise en forme de l'insert on dispose les parois de sorte que, la section formée par lesdites parois et la base P13 de l'insert par un plan radial passant par l'axe 12, diminue entre la sortie du premier entrefer et l'entrée du deuxième entrefer.

Pour obtenir un insert P10 de forme triangulaire, on dispose les parois 53, 54, 55 de sorte que, à l'entrée de l'entrefer aval, la section formée par lesdites parois et la base P13 de l'insert par un plan perpendiculaire à la direction longitudinale, soit de forme triangulaire

De même, on dispose les parois 53, 54, 55 du chenal 5 de sorte que la section formée par lesdites parois et la base P13 de l'insert P10 par un plan perpendiculaire à la direction longitudinale diminue entre la sortie de l'entrefer amont et l'entrée de l'entrefer aval.

La paroi de profilage peut être fixe.

Ou encore, la paroi inférieure de la tête d'extrusion peut avoir une forme concave de profil cylindrique d'axe donné s'étendant transversalement, et dont une direction circonférentielle se confond avec la direction longitudinale DL définissant le sens de progression du profilé dans la machine.La paroi de profilage peut alors être formée par un rouleau cylindrique 10, mobile en rotation autour d'un axe 12 confondu avec l'axe de la paroi inférieure 20, dont une paroi radialement externe 11 forme ladite paroi de profilage.

On observera ici que le premier profilé P1 ne présente pas de discontinuité dans la direction transversale DT.

Par ailleurs, de préférence, la largeur hors-tout du premier profilé P1, et plus particulièrement la largeur hors-tout de sa sous-couche P14 formée d'un seul tenant, ladite largeur hors-tout étant considérée selon ladite direction transversale DT, représente plus de la moitié, et plus préférentiellement au moins 70%, de la largeur hors-tout du profilé complexe PC, PC1, PC2 qui est obtenu en sortie de l'entrefer aval.

La sous-couche P14, qui est formée d'un matériau, ici le premier mélange M1, plus rigide que le matériau constitutif du second profilé P2 et donc constitutif de la bande de roulement, à savoir le second mélange M2, doit en effet de préférence occuper une largeur suffisante pour contribuer efficacement à la bonne tenue mécanique du pneumatique, en combinaison avec une nappe de renfort sous-jacente avec laquelle ladite sous-couche P14 forme en quelque sorte une poutre composite dans l'épaisseur radiale du pneumatique,.

Par ailleurs, comme indiqué plus haut, les inserts P10 sont formés à l'aide du premier matériau M1 et sont en continuité de matière avec le reste du profilé P1, et plus particulièrement avec la sous-couche formée d'un seul tenant sur la largeur susmentionnée.

Quel que soit du reste son mode de réalisation, le profilé complexe PC, PC1, PC2 selon l'invention peut utilement être utilisé pour coiffer le sommet d'une ébauche de pneumatique dans le but de former, après moulage et vulcanisation, la bande de roulement de ce dernier.

On va maintenant décrire un autre aspect de l'invention, à savoir la mise en oeuvre d'ouïes de sortie 71, 72 pour générer une gomme de bordure dans les sillons P20. Cet aspect de l'invention peut en effet être avantageusement complémentaire de la génération et du positionnement des inserts P10 tels qu'obtenus par les chenaux 5 décrits dans ce qui précède.

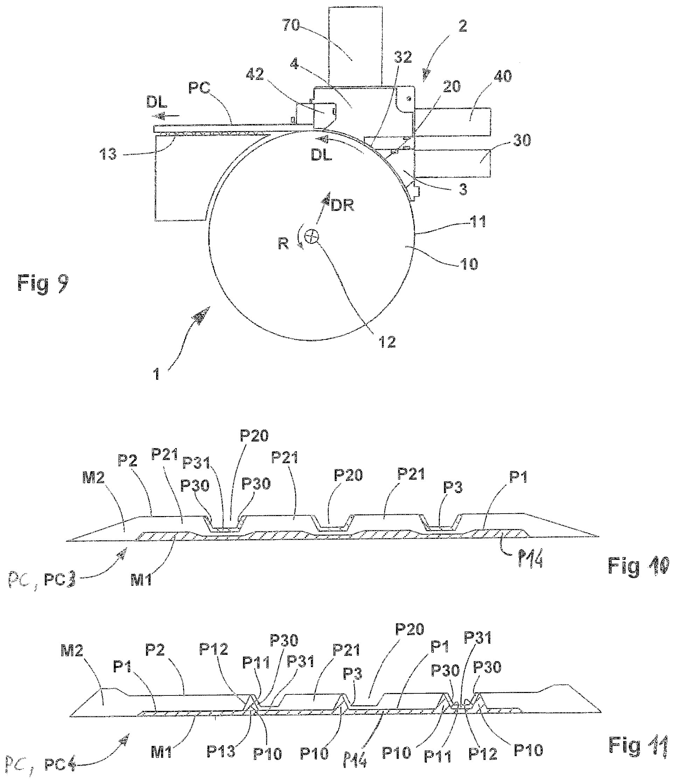

Cet aspect de l'invention sera plus particulièrement décrit en référence aux figures 9 à 17, sans que cela ne constitue une restriction de l'invention.

Bien entendu, par commodité de description, certains éléments identiques ou analogues à ceux déjà décrits dans ce qui précède recevront les mêmes références, et ne feront du reste pas nécessairement l'objet d'une nouvelle description détaillée.

La figure 10 représente, selon une troisième variante de réalisation, un troisième profilé complexe PC3 comprenant un premier profilé P1 constitué d'un premier mélange M1 destiné à former la sous couche et un second profilé P2 constitué d'un second mélange M2 destiné à former la bande de roulement. Le profil de la bande de roulement comprend des rainures longitudinales P20 intercalées entre des cordons longitudinaux P21.

Ce troisième profilé complexe PC3 comprend également au moins une gomme de bordure P3 comprenant une gomme de bordure P31 disposée en fond de sillon associée à au moins une gomme de bordure latérale P30 recouvrant une paroi latérale d'un sillon.

La gomme de bordure P3 est formée à partir d'un troisième mélange M3.

Ledit troisième mélange M3 peut être de même nature que le mélange M1 ou, préférentiellement, de nature différente.

Le cas échéant, le troisième mélange M3 peut être de même nature que le second mélange M2.

Un quatrième profilé complexe PC4 représenté à la figure 11 comprend des inserts longitudinaux P10 constitués du mélange M1, de forme générale triangulaire, et qui s'élèvent dans la direction radiale DR depuis une base fictive P13 située sur la face radialement externe de la sous couche P1, jusqu'à la surface radialement externe du second profilé P2. Ces inserts longitudinaux P10 sont disposés en bordure d'un cordon longitudinal P21 à la frontière entre le cordon longitudinal P21 et le sillon longitudinal P20 de sorte qu'une paroi latérale P11 ou P12 de l'insert forme le bord du sillon. La forme triangulaire de l'insert P10 n'est pas limitative et il est tout à fait possible, comme on le verra par la suite, de réaliser des inserts de formes différentes pour autant que la base de l'insert soit en continuité de matière avec la surface radialement externe du second profilé formant la sous couche.

On observe que seule la paroi de l'insert P10 opposée à la paroi formant la bordure du sillon est alors mise en joint avec le second mélange M2.

La gomme de bordure P3 a pour objet de recouvrir les parois latérales de l'insert P10 et le fond du sillon avec un troisième mélange M3.

Ce troisième mélange M3 pourra être formé à partir d'une composition de nature différente des compositions formant les mélanges M1 ou M2, ou, de préférence ici, de même nature que le mélange M2, mais qui peut être également.

Il va de soi que les caractéristiques distinctives de ces deux profilés complexes PC3 et PC4 peuvent être combinées pour former un profilé complexe comprenant une gomme de bordure recouvrant les parois de sillons bordées par un insert et les parois de sillons ne comprenant pas d'inserts.

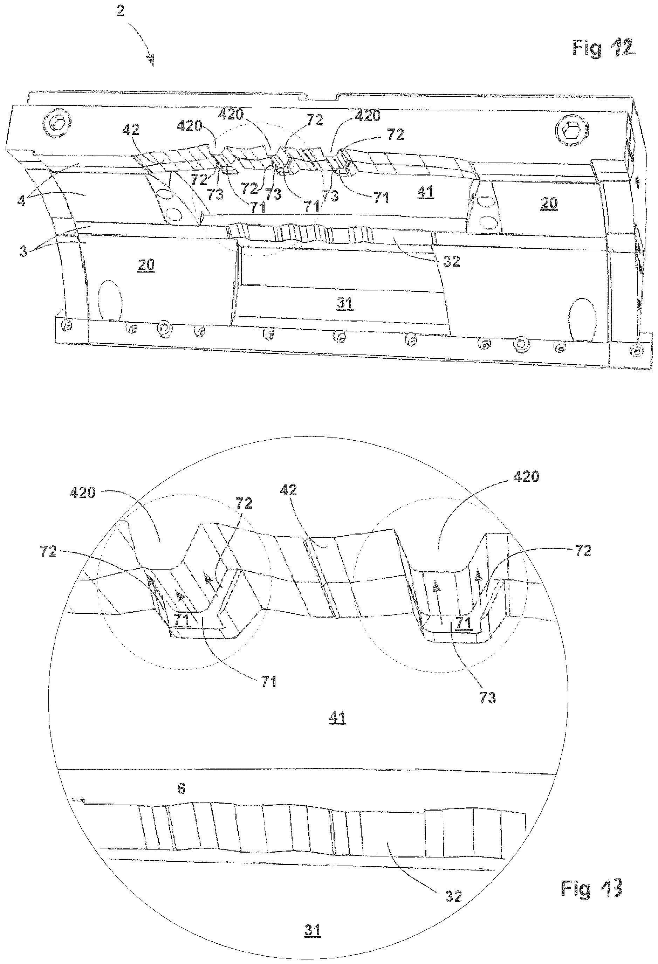

Une variante de tête d'extrusion 2, correspondant aux figures 12 à 17,a été mise au point pour permettre la réalisation de profilés complexes PC3, PC4 du type de ceux représentés aux figures 10 et 11.

Comme précédemment, la tête d'extrusion 2 comprend une extrudeuse amont 30 (visible sur la figure 9), dans laquelle est travaillé le premier mélange M1, et qui débouche dans la paroi inférieure 20 par un canal d'extrusion amont 31 disposé en amont (dans le sens de la direction longitudinale DL) de la lame de profilage amont 32.

Cette lame de profilage amont 32, dont le profil transversal est adapté pour mettre en forme le premier profilé P1 destiné à former la sous-couche P14, forme un entrefer avec la paroi radialement externe 11 du rouleau 10. Le premier profilé P1 peut être du type de celui représenté à la figure 3, et s'étendre de manière continue dans la direction transversale DT.

Une extrudeuse aval 40 (visible sur la figure 9) dans laquelle est travaillé le mélange M2, débouche par un canal d'extrusion aval 41 dans la paroi inférieure 20, en aval de la lame de profilage amont 32 et en amont d'une lame de profilage aval 42.

Le flux de mélange M2 provenant du canal d'extrusion aval 41 entre donc en contact avec la partie radialement externe du premier profilé P1 formant la sous couche dès sa sortie du canal d'extrusion aval 41 et directement en aval de la lame de profilage amont 32, bien en amont de la lame de profilage aval 42. Le raccordement de ces deux flux peut être une source de turbulence susceptible de modifier le profil de la sous couche, ce qui nécessite une adaptation en conséquence du profil transversal de la lame de profilage amont 32.

Comme précédemment, l'entrefer aval défini entre la lame de profilage aval 42 et la surface radialement externe 11 du rouleau 10 sert à déterminer le profil transversal du profilé complexe PC formé de l'assemblage des gommes M1 et M2, et à parfaire la mise en joint des profilés P1 et P2.

Tout comme sur les première et seconde variantes de réalisation décrites précédemment en référence aux figures 5 à 8, la lame de profilage aval 42 comprend de préférence au moins une saillie 420 destinée à former un sillon longitudinal P20.

Cependant, à la différence de ces précédentes variantes, le bloc d'extrusion aval 4 est associé, en sus de l'extrudeuse aval 40, à une extrudeuse annexe 70, visible sur la figure 9, qui fournit le troisième mélange M3.

L'extrudeuse annexe 70 est reliée par un canal interne cheminant dans la tête d'extrusion 2 jusqu'au canal de d'extrusion 71 débouchant dans la partie amont de la saillie 420 de la lame de profilage aval 42. Ce canal d'extrusion annexe 71 est formé par deux parois latérales 720 sensiblement parallèles aux parois latérales 422 de la partie aval de la saillie, et par une paroi amont 73 perpendiculaire à la direction longitudinale. Ces parois sont portées par des cloisons latérales 721 et une cloison amont 731.

La section du canal d'extrusion annexe 71 par un plan de section radial, perpendiculaire à la direction longitudinale DL, définit une surface fictive dans laquelle s'inscrit en totalité la section de la partie aval de la saillie 420 par ce même plan. On observera que le bord aval 723 des cloisons latérales 721 ainsi que la face amont (non visible) de la saillie 420 proprement dite sont confondus avec ce plan de section.

Au moins une des parois latérales 720 est distante d'une valeur d de la paroi latérale 422 de la partie aval de la saillie 420 de manière à définir entre ces deux parois une ouïe de sortie latérale 72 de largeur d par laquelle le mélange M3 provenant de l'extrudeuse annexe 70 est extrudé pour former une gomme de bordure latérale P30.

Le bord radialement inférieur 722 des parois latérales 720 et le bord radialement inférieur 732 de la paroi amont 730 sont inscrits dans un plan sensiblement perpendiculaire à la direction radiale DR. Ce plan est distant de la paroi radialement interne 421 de la saillie 420 d'une valeur e. Et l'ouverture dans ledit plan de section radial entre la paroi radialement inférieure 421 et le bord radialement inférieur des parois 720 et 730 définit une ouïe de sortie inférieure 73 de hauteur e, par laquelle le mélange provenant de l'extrudeuse annexe 70 est extrudé pour former la gomme de bordure de fond de sillon P31.

Les ouïes de sortie latérales 72 et l'ouïe de sortie inférieure 73 sont ouvertes l'une dans l'autre pour assurer la continuité de matière entre les gommes de bordure latérales P30 et la gomme de bordure de fond de sillon P31.

De même, l'espace radialement inférieur de la ou des ouïes de sortie 72, 73 reste de préférence ouvert et fait face au flux de matière provenant de l'amont et pénétrant dans l'entrefer définit par la lame de profilage aval 42 et la surface radialement externe 11 du rouleau 10.

Les valeurs des distances d et e définissent les épaisseurs des gommes de bordure respectivement latérales P30 et inférieures P31. Ces valeurs sont en règle générale de l'ordre du millimètre et préférentiellement inférieure à cette valeur.

Le sens d'écoulement préférentiel du matériau M3 en sortie du canal d'extrusion 71 est matérialisé par des flèches en trait gras.

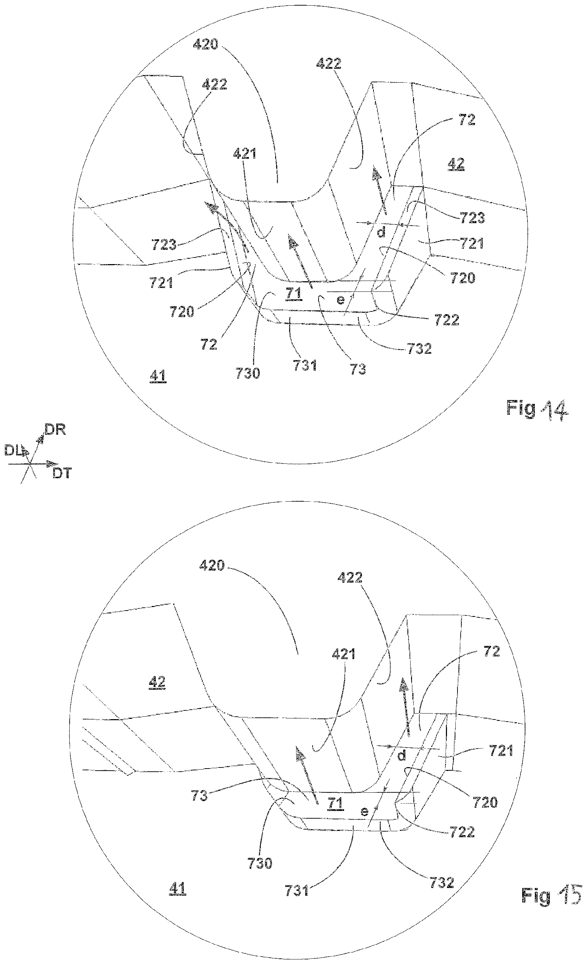

Le choix entre une ou deux ouïes latérales dépend de la configuration du profilé complexe PC, PC3, PC4 que l'on souhaite réaliser, en particulier si on désire recouvrir d'une gomme de bordure P3 une seule ou les deux faces latérales du sillon (voir figures 10 ou 11). Ainsi, la figure 14 représente un canal d'extrusion annexe 71 comportant deux ouïes latérales 72 ; et la figure 15 représente un canal d'extrusion annexe 71 ne comportant qu'une seule ouïe latérale 72.

L'extrusion de la gomme de bordure P3 dans la lame de profilage aval juste en amont de la saillie 420 permet d'éviter de perturber le profil de cette gomme par les effets de la circulation des flux de mélange M1 et M2 entrant dans l'entrefer aval défini par cette lame de profilage aval 42. Le canal d'extrusion annexe étant disposé à quelques millimètres de la sortie du profilé complexe, la pression dans le matériau est proche de zéro et les mouvements de gomme susceptibles de modifier le profil de la gomme de bordure sont négligeables.

Une quatrième forme de réalisation de l'invention est particulièrement adaptée pour produire des profilés complexes PC4 d'un quatrième type correspondant à celui représenté à la figure 11, lequel comprend des inserts P10 disposés à la frontière d'un bord ou des deux bords latéraux d'un sillon P20.

Une tête d'extrusion 2 selon cette forme de réalisation de l'invention est illustrée par les figures 16 et 17. Elle se distingue de la tête d'extrusion permettant de réaliser le troisième profilé complexe PC3 décrit ci-dessus en ce qu'elle comprend au moins un élément séparateur 6, disposé dans le prolongement longitudinal des saillies 420 de la lame de profilage aval 42. Cet élément séparateur 6 s'étend depuis la lame de profilage amont 32 jusqu'à la lame de profilage aval 42, et divise ledit canal d'extrusion aval 41 en sous-canaux 410.

Au niveau de la lame de profilage aval 42, les parois latérales 63 de l'élément séparateur 6 sont disposées en continuité des cloisons latérales 721 du canal d'extrusion annexe 71, et la paroi radialement interne 64 de l'élément séparateur 6 est disposée radialement sensiblement au même niveau que le bord radialement inférieur 732 de la cloison 731 supportant la paroi amont 730 de la sortie du canal d'extrusion annexe 71. Aussi, la cloison amont 731 supportant ladite paroi amont 730 peut utilement être confondue avec l'extrémité aval de l'élément séparateur 6.

Au niveau de son raccordement avec la lame de profilage amont 32, la paroi radialement interne 64 de l'élément séparateur est disposée radialement au même niveau que la paroi de la lame de profilage amont 32.

De préférence, la tête d'extrusion 2 comprend également au moins un chenal 5 s'étendant dans la direction longitudinale, de la lame de profilage amont 32 jusqu'à la lame de profilage aval 42.

Un tel chenal 5 présente de préférence la ou les caractéristiques déjà décrites en référence aux figures 1 à 8, aux mêmes fins de protéger l'insert P10 vis-à-vis du second mélange M2.

Un tel chenal 5 se présente de préférence ici sous la forme d'un canal de section sensiblement triangulaire ou trapézoïdale comprenant une paroi latérale 53 supportée par une cloison 530, une autre paroi latérale, placée en vis-à-vis de la précédente, et formée par une paroi latérale 63 d'un élément séparateur 6, et une paroi 54 formant le fond du chenal. Les parois 53, 63 et 54 forment ensemble une surface concave continue, ouverte radialement vers l'intérieur, et dont la concavité fait face à la paroi radialement externe 11 du rouleau 10. Ces parois définissent un conduit, à l'image d'une gouttière ou d'une coque renversée ouverte à ses deux extrémités amont 51 et aval 52.

Au niveau de l'extrémité amont 51 du chenal 5, la cloison 530 est raccordée avec le flanc aval 321 de la lame de profilage aval 32, et le bord radialement inférieur de la cloison 530 affleure avec le profil de la lame d'extrusion amont 32. La lame de profilage amont 32 présente, au niveau de cette extrémité amont 51 du chenal 5, un profil transversal en forme d'exutoire 320, dont la partie aval est disposée en continuité de la paroi 55 formant le fond du chenal, de manière à favoriser l'écoulement du mélange M1 dans le chenal 5.

Au niveau de l'extrémité aval 52 du chenal 5, le chenal 5 s'ouvre directement dans l'entrefer formé par la lame de profilage aval 42 et la paroi radialement externe 11 du rouleau 10. Le chenal 5, illustré dans les figures 16 et 17, est configuré de sorte que la paroi 55 formant le fond du chenal 5 est disposée radialement au même niveau que la position radiale à ce niveau de la lame de profilage aval 42. En revanche, au niveau de cette extrémité aval 52, la cloison 530 supportant la paroi latérale 53 du chenal s'étend radialement vers l'intérieur à une position radiale inférieure à la position de la lame de profilage aval 42.

S'il n'est pas nécessaire de faire émerger l'insert au niveau de la surface de la bande de roulement, il est tout à fait possible, au niveau de l'extrémité aval 52 du chenal 5, de disposer la paroi 55 formant le fond du chenal 5 à une position radialement inférieure à celle de la position radiale de la lame de profilage aval 42.

Ainsi, tout en restant en continuité de matière avec le mélange M1 formant la sous couche, la partie de mélange M1 pénétrant dans le chenal 5 s'écoule directement depuis l'extrémité amont 51 jusqu'à l'extrémité aval 52 sans être mise en contact avec le mélange M2, de sorte que les adaptations de pression observées au niveau du raccordement du flux de mélange M2 avec le flux de mélange M1, n'entraînent aucune perturbation du profil conféré au mélange M1 ayant pénétré dans le chenal 5 et destiné à former l'insert P10.

La mise en forme de l'insert P10 se fait tout au long de la progression du premier mélange M1 dans le chenal 5, et le profil selon un plan radial passant par l'extrémité aval du chenal 5 correspond au profil de l'insert P10 du profilé complexe PC. La mise en joint de la paroi de l'insert (P11 ou P12) opposée à la paroi de l'insert formant la paroi du sillon avec le mélange M2 formant la bande de roulement se fait alors directement dans l'entrefer formé par la lame de profilage aval 42 et la paroi radialement externe 11 du rouleau, sans que le profil de l'insert ne soit modifié.

L'évolution de la pression dans le chenal 5 peut être contrôlée en ajustant l'angle formé par les parois latérales 53 et 63 par rapport à la direction longitudinale DL. Ces deux parois convergent l'une vers l'autre allant de l'amont vers l'aval en faisant par exemple un angle de l'ordre de 5° avec la direction longitudinale, de sorte que la section transversale du chenal par un plan radial ou par un plan perpendiculaire à la direction longitudinale décroît de manière continue en allant de l'extrémité amont 51 vers l'extrémité aval 52 du chenal, et que ladite section est minimale au niveau de l'extrémité aval 52.

La cloison 530 du chenal supportant la paroi latérale 53 est de faible épaisseur pour ne pas perturber les flux de matériau circulant sur ses deux faces. Une épaisseur inférieure à 2mm et préférentiellement inférieure à 1mm semble convenir.

Dans le cas illustré aux figures 16 et 17, la section du chenal au niveau de l'extrémité aval 52 a une forme sensiblement triangulaire correspondant à une forme préférentielle de réalisation de l'insert. Toutefois, la forme de cette section n'est pas limitative et peut être adaptée à volonté.

L'extrusion du mélange M3 par les ouïes de sorties 72 et 73 permet de déposer la gomme de bordure P3 sur le flanc de l'insert et sur le fond du sillon.

On observe ici que l'extrémité aval 52 du chenal 5 est disposée légèrement en amont des ouïes latérales 72 de manière à ce que le bord latéral P11 de l'insert P10 soit formé avant de recevoir la gomme de bordure P3.

Ainsi, plus globalement, une tête d'extrusion 2 selon l'invention, qui comporte un ou des chenaux 5 tels que décrits plus haut, peut de préférence être caractérisée en ce que la lame de profilage aval 42 comprend au moins une saillie 420 pour former un sillon P20 longitudinal dans le profilé complexe PC, en ce que le chenal 5 est agencé de manière à disposer l'insert P10 à la frontière d'un bord latéral dudit sillon P20 de sorte qu'une paroi latérale P11, P12 dudit insert P10 forme le bord dudit sillon, et en ce que le canal d'extrusion annexe 71 comporte des ouïes de sortie 72, 73 disposées en bordure de ladite saillie 420, en amont de ladite saillie 420, et formant une ou des ouïes de sortie latérale 72 et une ouïe de sortie inférieure 73, de manière à pouvoir déposer dans le sillon P20 du profilé complexe PC1, PC2 une gomme de bordure P3 qui comprend une gomme de bordure de fond de sillon P31 déposée sur le fond du sillon par l'ouïe de sortie inférieure 73 et au moins une gomme de bordure latérale P30 déposée sur la paroi latérale P11, P12 de l'insert P10 par une ouïe de sortie latérale 72.

Avantageusement, l'utilisation des ouïes de sortie 72, 73, en combinaison avec le ou les chenaux 5, permet de recouvrir avec précision la paroi latérale de l'insert P10, et plus globalement les parois du sillon P20, d'une couche de bordure régulière et fine, en surépaisseur bien contrôlée, qui peut être de préférence de même composition que le second mélange M2.

Bien entendu, l'invention porte sur un procédé correspondant, et sur les variantes de celui-ci.

Ainsi, l'invention concerne un procédé de coextrusion d'un profilé complexe PC, PC1, PC2, PC4 constitué de l'assemblage de profilés P1, P2 formés à partir de mélanges de caoutchouc M1, M2 distincts dans lequel, à l'aide d'une machine de coextrusion 1 comprenant une extrudeuse amont 30 et une extrudeuse aval 40 débouchant dans une cavité d'extrusion formée par l'espace compris entre une paroi inférieure 20 d'une tête d'extrusion 2 et une paroi de profilage 11 disposée en vis-à-vis de la paroi inférieure 20, on met en œuvre les étapes au cours desquelles :
- à l'aide de l'extrudeuse amont 30, on délivre, en amont d'une première lame de profilage 32, dite « lame de profilage amont » 32, un premier mélange de caoutchouc M1 qui débouche par un canal d'extrusion amont 31 dans la paroi inférieure 20 de la tête d'extrusion 2,
- on réalise un premier profilé P1, formé du premier mélange de caoutchouc M1, dans un entrefer amont qui est défini par la lame de profilage amont 32 et la paroi de profilage 11, ledit premier profilé P1 comprenant au moins un premier élément de profilé qui est destiné à former une sous-couche P14 et au moins un second élément de profilé qui est destiné à former un insert P10 longitudinal, dont une base P13 est en continuité de matière avec ladite sous-couche P14, et qui forme sur ladite sous-couche P14 une excroissance dont des parois latérales P11, P12 s'étendent vers l'extérieur par rapport à une surface externe dudit premier profilé P1,
- à l'aide de l'extrudeuse aval 40 on délivre un second mélange de caoutchouc M2 par un canal d'extrusion aval 41 qui débouche dans la paroi inférieure 20 de la tête d'extrusion 2 en aval de la lame de profilage amont 32, et on met en joint, au niveau d'un raccordement du flux de second mélange de caoutchouc M2 avec le flux de premier mélange de caoutchouc M1, le second mélange de caoutchouc M2 avec la surface radialement externe du premier profilé P1,
- on fait passer le premier profilé P1 et le second mélange de caoutchouc M2 dans un entrefer aval qui est disposé en aval du canal d'extrusion aval 40 et qui est défini par une seconde lame de profilage 42, dite « lame de profilage aval » 42, et la paroi de profilage 11, afin de réaliser un profilé complexe PC formé du premier et du second mélange de caoutchouc M1, M2.

Selon ce procédé, conformément à l'invention, on fait circuler une portion du premier mélange de caoutchouc M1, destinée à former l'insert P10, entre des parois 53, 54, 55 d'un chenal 5 qui s'étendent selon une direction longitudinale DL entre la lame de profilage amont 32 et la lame de profilage aval 42, depuis une extrémité amont 51 du chenal 5 qui est située en amont du raccordement des flux des premier et second mélanges de caoutchouc M1, M2 jusqu'à une extrémité aval 52 dudit chenal 5 qui est située en aval dudit raccordement des flux et en amont de la lame de profilage aval 42, lesdites parois 53, 54, 55 du chenal formant ensemble une surface concave ouverte vers l'intérieur de la cavité d'extrusion, et étant disposées de sorte que la portion du premier mélange de caoutchouc M1 qui pénètre dans le chenal 5 et qui est destinée à former l'insert P10, lorsqu'elle progresse longitudinalement dans le chenal 5, reste en continuité de matière avec la sous-couche P14 sans être mise en contact avec le second mélange de caoutchouc M2, et que la mise en joint d'une ou des parois latérales P11, P12 dudit insert P10 avec le second mélange de caoutchouc M2 s'effectue ensuite dans l'entrefer aval défini par la lame de profilage aval 42 et la paroi de profilage 11.

En outre, de préférence, la lame de profilage aval 42 comprend au moins une saillie 420 pour former un sillon P20 longitudinal dans le profilé complexe PC, et l'insert P10 est disposé à la frontière d'un bord latéral dudit sillon P20 de sorte qu'une paroi latérale P11, P12 dudit insert P10 forme le bord dudit sillon, et dans lequel, à l'aide d'une l'extrudeuse annexe 70, on délivre un troisième mélange de caoutchouc M3 par un canal d'extrusion annexe 71 qui débouche dans une partie amont de la saillie 420, ledit canal d'extrusion annexe 71 comportant des ouïes de sortie 72, 73 disposées en bordure de ladite saillie 420 et formant une ou des ouïes de sortie latérale 72 et une ouïe de sortie inférieure 73, de manière à déposer dans le sillon P20 du profilé complexe PC, PC1, PC2, PC4 une gomme de bordure P3 qui comprend une gomme de bordure de fond de sillon P31 déposée sur le fond du sillon par l'ouïe de sortie inférieure 73 et au moins une gomme de bordure latérale P30 déposée sur la paroi latérale P11, P12 de l'insert P10 par une ouïe de sortie latérale 72.

De préférence, l'extrémité aval 52 du chenal 5 est disposée en amont des ouïes de sortie latérales 73 de manière à ce que la paroi latérale P11, P12 de l'insert P10 soit formée avant de recevoir la gomme de bordure P3.

De préférence, tel que cela est illustré sur la figure 11, on utilise, pour former la gomme de bordure P3, un troisième mélange de caoutchouc M3 qui est de même composition que le second mélange de caoutchouc M2.

Avantageusement, on peut ainsi obtenir un profilé complexe PC, PC4 dans lequel, en quelque sorte, on aura "déporté" l'insert P10 latéralement (selon la direction transversale DT) à l'intérieur du second mélange M2 constitutif du bloc correspondant de la bande de roulement, c'est-à-dire en définitive à l'intérieur d'un bloc de la bande de roulement, tout en conservant, grâce à la finesse de l'épaisseur de la gomme de bordure latérale P30 que permet d'obtenir l'ouïe de sortie latérale 72, ledit insert P10 proche du sillon P20, dans une position où ledit insert P10 renforce efficacement le bloc en second mélange.

A titre indicatif, l'épaisseur de la gomme de bordure latérale P30 qui recouvre la paroi latérale P11, P12 de l'insert P10 pourra être de l'ordre de 2 mm.

En définitive, selon que l'on choisira de recouvrir une paroi latérale P11, P12 d'un insert P10 soit par une fine couche de gomme de bordure P31 en second mélange M2 délivrée par l'extrudeuse annexe et 70 les ouïes 72, soit par une couche épaisse (considérée selon la direction transversale) de second mélange M2 délivré par l'extrudeuse aval 40, on pourra positionner latéralement comme on le souhaite l'insert P10 dans un bloc de la bande de roulement, en ceci que la profondeur d'enfoncement (considérée selon la direction transversale DT) dudit insert P10 dans ledit bloc sera librement définie par le dimensionnement des ouïes 72 et de la lame de profilage aval 42.

A titre indicatif, la profondeur d'enfoncement latéral de l'insert P10 dans le bloc en second mélange M2 pourra être comprise entre une profondeur minimale de 2 mm (épaisseur fine réalisable par les ouïes 72) et une profondeur maximale de 12 mm, typiquement équivalente à la moitié de la dimension latérale hors-tout (généralement de l'ordre de 25 mm) d'un bloc de la bande de roulement.

### NOMENCLATURE

- 1: Machine de coextrusion.
- 10: Rouleau
- 11: Paroi radialement externe du rouleau.
- 12: Axe de rotation du rouleau.
- 13: Tapis d'évacuation.
- 2: Tête d'extrusion.
- 20: Paroi inférieure.
- 3: Bloc d'extrusion amont.
- 30: Extrudeuse amont.
- 31: Canal d'extrusion amont.
- 32: Lame de profilage amont.
- 320: Exutoire.
- 321: Flanc aval de la lame de profilage amont.
- 4: Bloc d'extrusion aval.
- 40: Extrudeuse aval.
- 41: Canal d'extrusion aval.
- 410: Sous canal.
- 42: Lame de profilage aval.
- 420: Saillie.
- 421: Paroi radialement inférieure de la saillie.
- 422: Paroi latérale de la saillie.
- 5: Chenal
- 51: Extrémité amont du chenal.
- 52: Extrémité aval du chenal.
- 53: Première paroi latérale du chenal.
- 530: Première cloison.
- 54: Deuxième paroi latérale du chenal.
- 540: Deuxième cloison.
- 55: Paroi formant le fond du chenal.
- 6: Élément séparateur.
- 63: Première paroi latérale de l'élément séparateur.
- 64: Deuxième paroi latérale de l'élément séparateur.
- 65: Paroi radialement interne de l'élément séparateur.
- 70: Extrudeuse annexe.
- 71: Canal d'extrusion annexe.
- 72: Ouïe de sortie latérale.1
- 720: Paroi latérale du canal de sortie annexe 71.
- 721: Cloison latérale du canal de sortie supportant la paroi latérale 720.
- 722: Bord radialement inférieur de la paroi latérale 720.
- 723: Bord aval de la paroi latérale 720.
- 73: Ouïe de sortie inférieure.
- 730: Paroi amont du canal de sortie annexe 71.
- 731: Cloison amont supportant la paroi amont 730.
- 732: Bord radialement inférieur de la paroi amont 730.

- R: Sens de rotation du rouleau.
- DT: Direction transversale.
- DL: Direction longitudinale ; Sens de progression.
- PC, PC0, PC1, PC2, PC3, PC4: Profilé complexe.
- P1: Premier profilé (formant une sous-couche).
- P10: Insert longitudinal (second élément constitutif du premier profilé P1).
- P11: Première paroi latérale de l'insert.
- P12: Seconde paroi latérale de l'insert.
- P13: Base de l'insert.
- P14: Sous-couche (premier élément constitutif du premier profilé P1).
- P2: Second profilé (bande de roulement).
- P20: Sillon longitudinal.
- P21: Cordon longitudinal.
- P3: Gommes de bordure P30 et P31.
- P30: Gomme de bordure latérale.
- P31: Gomme de bordure de fond de sillon
- M1: Premier mélange de caoutchouc
- M2: Second mélange de caoutchouc
- M3: Troisième mélange de caoutchouc formant les gommes de bordure.

## Revendications

1. Procédé de coextrusion d'un profilé complexe (PC) constitué de l'assemblage de profilés (P1, P2) formés à partir de mélanges de caoutchouc (M1, M2) distincts dans lequel, à l'aide d'une machine de coextrusion (1) comprenant une extrudeuse amont (30) et une extrudeuse aval (40) débouchant dans une cavité d'extrusion formée par l'espace compris entre une paroi inférieure (20) d'une tête d'extrusion (2) et une paroi de profilage (11) disposée en vis-à-vis de la paroi inférieure (20), on met en oeuvre les étapes au cours desquelles :
- à l'aide de l'extrudeuse amont (30), on délivre, en amont d'une première lame de profilage (32), dite « lame de profilage amont » (32), un premier mélange de caoutchouc (M1) qui débouche par un canal d'extrusion amont (31) dans la paroi inférieure (20) de la tête d'extrusion (2),
- on réalise un premier profilé (P1), formé du premier mélange de caoutchouc (M1), dans un entrefer amont qui est défini par la lame de profilage amont (32) et la paroi de profilage (11), ledit premier profilé (P1) comprenant au moins un premier élément de profilé qui est destiné à former une sous-couche (P14) et au moins un second élément de profilé qui est destiné à former un insert (P10) longitudinal, dont une base (P13) est en continuité de matière avec ladite sous-couche (P14), et qui forme sur ladite sous-couche (P14) une excroissance dont des parois latérales (P11, P12) s'étendent vers l'extérieur par rapport à une surface externe dudit premier profilé,
- à l'aide de l'extrudeuse aval (40) on délivre un second mélange de caoutchouc (M2) par un canal d'extrusion aval (41) qui débouche dans la paroi inférieure (20) de la tête d'extrusion (2) en aval de la lame de profilage amont (32), et on met en joint, au niveau d'un raccordement du flux de second mélange de caoutchouc (M2) avec le flux de premier mélange de caoutchouc (M1), le second mélange de caoutchouc (M2) avec la surface radialement externe du premier profilé (P1),
- on fait passer le premier profilé (P1) et le second mélange de caoutchouc (M2) dans un entrefer aval qui est disposé en aval du canal d'extrusion aval (40) et qui est défini par une seconde lame de profilage (42), dite « lame de profilage aval » (42), et la paroi de profilage (11), afin de réaliser un profilé complexe (PC) formé du premier et du second mélange de caoutchouc (M1, M2),
ledit procédé étant **caractérisé en ce qu'**on fait circuler une portion du premier mélange de caoutchouc (M1), destinée à former l'insert (P10), entre des parois (53, 54, 55) d'un chenal (5) qui s'étendent selon une direction longitudinale (DL) entre la lame de profilage amont (32) et la lame de profilage aval (42), depuis une extrémité amont (51) du chenal (5) qui est située en amont du raccordement des flux des premier et second mélanges de caoutchouc (M1, M2) jusqu'à une extrémité aval (52) dudit chenal (5) qui est située en aval dudit raccordement des flux et en amont de la lame de profilage aval (42), lesdites parois (53, 54, 55) du chenal formant ensemble une surface concave ouverte vers l'intérieur de la cavité d'extrusion, et étant disposées de sorte que la portion du premier mélange de caoutchouc (M1) qui pénètre dans le chenal (5) et qui est destinée à former l'insert (P10), lorsqu'elle progresse longitudinalement dans le chenal (5), reste en continuité de matière avec la sous-couche (P14) sans être mise en contact avec le second mélange de caoutchouc (M2), et que la mise en joint d'une ou des parois latérales (P11, P12) dudit insert (P10) avec le second mélange de caoutchouc (M2) s'effectue ensuite dans l'entrefer aval défini par la lame de profilage aval (42) et la paroi de profilage (11).

2. Procédé de coextrusion selon la revendication 1, dans lequel les parois (53, 54, 55) du chenal (5) s'étendent depuis l'entrefer amont jusqu'à l'entrefer aval.

3. Procédé de coextrusion selon la revendication 1 ou la revendication 2, dans lequel la lame de profilage aval (42) comprend au moins une saillie (420) pour former un sillon (P20) longitudinal dans le profilé complexe (PC), procédé dans lequel l'insert (P10) est disposé à la frontière d'un bord latéral dudit sillon (P20) de sorte qu'une paroi latérale (P11, P12) dudit insert (P10) forme le bord dudit sillon, et dans lequel, à l'aide d'une l'extrudeuse annexe (70), on délivre un troisième mélange de caoutchouc (M3) par un canal d'extrusion annexe (71) qui débouche dans une partie amont de la saillie (420), ledit canal d'extrusion annexe (71) comportant des ouïes de sortie (72, 73) disposées en bordure de ladite saillie (420) et formant une ou des ouïes de sortie latérale (72) et une ouïe de sortie inférieure (73), de manière à déposer dans le sillon (P20) du profilé complexe (PC, PC1, PC2, PC4) une gomme de bordure (P3) qui comprend une gomme de bordure de fond de sillon (P31) déposée sur le fond du sillon par l'ouïe de sortie inférieure (73) et au moins une gomme de bordure latérale (P30) déposée sur la paroi latérale (P11, P12) de l'insert (P10) par une ouïe de sortie latérale (72).

4. Procédé selon la revendication 3 dans lequel l'extrémité aval (52) du chenal (5) est disposée en amont des ouïes de sortie latérales (73) de manière à ce que la paroi latérale (P11, P12) de l'insert (P10) soit formée avant de recevoir la gomme de bordure (P3).

5. Procédé selon la revendication 3 ou 4 dans lequel on utilise, pour former la gomme de bordure (P3), un troisième mélange de caoutchouc (M3) qui est de même composition que le second mélange de caoutchouc (M2).

6. Procédé de coextrusion selon l'une quelconque des revendications précédentes, dans lequel, au cours de sa progression dans le chenal, la section de l'insert (P10) par un plan perpendiculaire à la direction longitudinale diminue entre la sortie de l'entrefer amont et l'entrée de l'entrefer aval.

7. Procédé de coextrusion selon l'une quelconque des revendications précédentes, dans lequel à l'entrée de l'entrefer aval, la section de l'insert (P10) par un plan perpendiculaire à la direction longitudinale est de forme triangulaire.

8. Procédé de coextrusion selon l'une quelconque des revendications précédentes, dans lequel, en sortie de l'entrefer aval, un sommet externe de l'insert (P10) affleure au niveau de la surface externe du profilé complexe (PC).

9. Procédé de coextrusion selon l'une quelconque des revendications précédentes dans lequel on met en joint le second mélange (M2) avec chacune des parois latérales (P11, P12) d'au moins un insert (P10).

10. Procédé de coextrusion selon l'une quelconque des revendications précédentes dans lequel on met en joint le second mélange (M2) avec une seule des parois latérales (P11, P12) d'au moins un insert (P10).

11. Procédé de coextrusion selon l'une quelconque des revendications précédentes, dans lequel on extrude un premier profilé (P1) ne présentant pas de discontinuité dans une direction transversale (DT) perpendiculaire à la direction longitudinale, et dont, de préférence, la largeur hors-tout considérée selon ladite direction transversale (DT) représente plus de la moitié, et plus préférentiellement au moins 70%, de la largeur hors-tout du profilé complexe (PC) obtenu.

12. Procédé de coextrusion selon l'une quelconque des revendications précédentes, dans lequel,
- la paroi inférieure de la tête d'extrusion a une forme concave de profil cylindrique d'axe donné s'étendant transversalement, et dont une direction circonférentielle se confond avec la direction longitudinale définissant le sens de progression du profilé dans la machine et,
- la paroi de profilage est formée par un rouleau cylindrique (10), mobile en rotation autour d'un axe (12) confondu avec l'axe de la paroi inférieure (20), dont une paroi radialement externe (11) forme ladite paroi de profilage.

13. Pneumatique formé à partir d'un profilé complexe réalisé à l'aide d'un procédé de coextrusion selon l'une quelconque des revendications 1 à 12.

14. Tête d'extrusion (2) d'un profilé complexe constitué de l'assemblage de profilés (P1, P2) formés à partir de mélanges de caoutchouc (M1, M2) distincts, destinée à être montée sur une machine de coextrusion (1), et dans laquelle les profilés progressent dans une cavité d'extrusion selon un sens d'extrusion allant de l'amont vers l'aval en définissant une direction longitudinale (DL), ladite tête d'extrusion (2) comprenant une paroi inférieure (20) qui délimite en partie ladite cavité d'extrusion et, en progressant de l'amont vers l'aval de ladite paroi inférieure (20) dans la direction longitudinale (DL) :
- un bloc d'extrusion amont (3) comportant un canal d'extrusion amont (31) qui est placé en sortie d'une extrudeuse amont (30), et qui débouche dans la paroi inférieure (20) afin de pouvoir délivrer un flux d'un premier mélange de caoutchouc (M1),
- une lame de profilage amont (32), disposée transversalement en aval du canal d'extrusion amont (31) pour déterminer un premier profil transversal d'un premier profilé (P1) formé à partir dudit flux de premier mélange de caoutchouc (M1),
- un bloc d'extrusion aval (4) comportant un canal d'extrusion aval (41) qui est placé en sortie d'une extrudeuse aval (40), et qui débouche dans la paroi inférieure (20) en aval de la lame de profilage amont (32), afin de pouvoir délivrer un flux d'un second mélange de caoutchouc (M2) et de mettre ledit flux de second mélange en joint avec le flux du premier mélange de caoutchouc (M1) au niveau d'une zone de raccordement de flux,
- une lame de profilage aval (42) qui est disposée transversalement en aval du canal d'extrusion aval (41) et de la zone de raccordement de flux, pour déterminer un profil transversal du profilé complexe (PC) formé à partir du premier et du second mélange de caoutchouc (M1, M2),
**caractérisée en ce que** ladite tête d'extrusion comporte au moins un chenal (5), formé par des parois (53, 54, 55) qui s'étendent selon la direction longitudinale (DL) entre la lame de profilage amont (32) et la lame de profilage aval (42), depuis une extrémité amont (51) du chenal (5) qui est située en amont de la zone de raccordement des flux des premier et second mélanges de caoutchouc (M1, M2) jusqu'à une extrémité aval (52) dudit chenal (5) qui est située en aval de ladite zone de raccordement des flux et en amont de la lame de profilage aval (42), lesdites parois (53, 54, 55) du chenal formant ensemble une surface concave ouverte vers l'intérieur de la cavité d'extrusion, et étant disposées de sorte que, d'une part, une portion du flux du premier mélange de caoutchouc (M1), destinée à former un insert (P10) dans le profilé complexe (PC), puisse pénétrer dans le chenal (5) et progresser longitudinalement dans ledit chenal (5) sans être mise en contact avec le second mélange de caoutchouc (M2), mais tout en restant en continuité de matière avec une sous-couche (P14) du premier profilé (P1) en premier mélange de caoutchouc (M1), qui aura été mise en forme dans un entrefer amont défini par la lame de profilage amont (32), et que, d'autre part, une mise en joint d'une ou de parois latérales (P11, P12) dudit insert (P10) avec le second mélange de caoutchouc (M2) s'effectue ensuite, dans un entrefer aval défini par la lame de profilage aval (42).

15. Tête d'extrusion selon la revendication 14 **caractérisée en ce que** la lame de profilage aval (42) comprend au moins une saillie (420) pour former un sillon (P20) longitudinal dans le profilé complexe (PC), **en ce que** le chenal (5) est agencé de manière à disposer l'insert (P10) à la frontière d'un bord latéral dudit sillon (P20) de sorte qu'une paroi latérale (P11, P12) dudit insert (P10) forme le bord dudit sillon, et **en ce que** le canal d'extrusion annexe (71) comporte des ouïes de sortie (72, 73) disposées en bordure de ladite saillie (420), en amont de ladite saillie (420), et formant une ou des ouïes de sortie latérales (72) et une ouïe de sortie inférieure (73), de manière à pouvoir déposer dans le sillon (P20) du profilé complexe (PC1, PC2) une gomme de bordure (P3) qui comprend une gomme de bordure de fond de sillon (P31) déposée sur le fond du sillon par l'ouïe de sortie inférieure (73) et au moins une gomme de bordure latérale (P30) déposée sur la paroi latérale (P11, P12) de l'insert (P10) par une ouïe de sortie latérale (72).

## Patentansprüche

1. Verfahren zur Coextrusion eines komplexen Profils (PC), das von der Anordnung von Profilen (P1, P2) gebildet ist, die aus gesonderten Kautschukmischungen (M1, M2) gebildet sind, wobei mithilfe einer Coextrusionsmaschine (1), die einen stromaufwärtigen Extruder (30) und einen stromabwärtigen Extruder (40) umfasst, die in einen Extrusionshohlraum münden, der von dem Raum zwischen einer unteren Wand (20) eines Extrusionskopfs (2) und einer Profilierungswand (11), die gegenüber der unteren Wand (20) angeordnet ist, gebildet ist, die Schritte durchgeführt werden, bei denen:
- mithilfe des stromaufwärtigen Extruders (30) stromauf eines ersten Profilierungsblatts (32), des "stromaufwärtigen Profilierungsblatts" (32), eine erste Kautschukmischung (M1) zugeführt wird, die durch einen stromaufwärtigen Extrusionskanal (31) in der unteren Wand (20) des Extrusionskopfs (2) mündet,
- ein erstes Profil (P1), das von der ersten Kautschukmischung (M1) gebildet wird, in einem stromaufwärtigen Luftspalt hergestellt wird, der vom stromaufwärtigen Profilierungsblatt (32) und der Profilierungswand (11) gebildet ist, wobei das erste Profil (P1) mindestens ein erstes Profilelement zur Bildung einer Unterschicht (P14) und mindestens ein zweites Profilelement zur Bildung eines Längseinsatzes (P10), dessen eine Basis (P13) stoffschlüssig mit der Unterschicht (P14) ausgebildet ist und der auf der Unterschicht (P14) eine Erhöhung bildet, deren Seitenwände (P11, P12) sich bezogen auf eine Außenfläche des ersten Profils nach außen erstrecken, umfasst,
- mithilfe des stromabwärtigen Extruders (40) eine zweite Kautschukmischung (M2) durch einen stromabwärtigen Extrusionskanal (41) zugeführt wird, der in der unteren Wand (20) des Extrusionskopfs (2) stromab des stromaufwärtigen Profilierungsblatts (32) mündet, und an einer Verbindungsstelle des Stroms der zweiten Kautschukmischung (M2) mit dem Strom der ersten Kautschukmischung (M1) die zweite Kautschukmischung (M2) mit der radial äußeren Fläche des ersten Profils (P1) in Verbindung gebracht wird,
- das erste Profil (P1) und die zweite Kautschukmischung (M2) in einen stromabwärtigen Luftspalt geleitet werden, der stromab des stromabwärtigen Extrusionskanals (40) angeordnet ist und der von einem zweiten Profilierungsblatt (42), dem "stromabwärtigen Profilierungsblatt" (42), und der Profilierungswand (11) definiert ist, um ein komplexes Profil (PC) herzustellen, das von der ersten und zweiten Kautschukmischung (M1, M2) gebildet ist,
wobei das Verfahren **dadurch gekennzeichnet ist, dass** ein Anteil der ersten Kautschukmischung (M1), der dazu bestimmt ist, den Einsatz (P10) zu bilden, zwischen Wänden (53, 54, 55) einer Rinne (5) strömen gelassen wird, die sich in einer Längsrichtung (DL) zwischen dem stromaufwärtigen Profilierungsblatt (32) und dem stromabwärtigen Profilierungsblatt (42) von einem stromaufwärtigen Ende (51) der Rinne (5), das sich stromauf der Verbindungsstelle der Ströme der ersten und zweiten Kautschukmischung (M1, M2) befindet, bis zu einem stromabwärtigen Ende (52) der Rinne (5), das sich stromab der Verbindungsstelle der Ströme und stromauf des stromabwärtigen Profilierungsblatts (42) befindet, erstrecken, wobei die Wände (53, 54, 55) der Rinne zusammen eine konkave Fläche bilden, die zum Inneren des Extrusionshohlraums offen ist, und so angeordnet sind, dass der Anteil der ersten Kautschukmischung (M1), der in die Rinne (5) eindringt und dazu bestimmt ist, den Einsatz (P10) zu bilden, wenn er sich in der Rinne (5) in Längsrichtung voran bewegt, mit der Unterschicht (P14) stoffschlüssig bleibt, ohne mit der zweiten Kautschukmischung (M2) in Kontakt gebracht zu werden, und dass das Inverbindungbringen einer oder der Seitenwände (P11, P12) des Einsatzes (P10) mit der zweiten Kautschukmischung (M2) anschließend im stromabwärtigen Luftspalt erfolgt, der vom stromabwärtigen Profilierungsblatt (42) und der Profilierungswand (11) definiert ist.

2. Coextrusionsverfahren nach Anspruch 1, wobei sich die Wände (53, 54, 55) der Rinne (5) vom stromaufwärtigen Luftspalt bis zum stromabwärtigen Luftspalt erstrecken.

3. Coextrusionsverfahren nach Anspruch 1 oder 2, wobei das stromabwärtige Profilierungsblatt (42) mindestens einen Vorsprung (420) zur Bildung einer Längsnut (P20) im komplexen Profil (PC) umfasst, wobei in dem Verfahren der Einsatz (P10) an der Grenze eines Seitenrands der Nut (P20) angeordnet ist, so dass eine Seitenwand (P11, P12) des Einsatzes (P10) den Rand der Nut bildet, und wobei mithilfe eines Nebenextruders (70) eine dritte Kautschukmischung (M3) durch einen Nebenextrusionskanal (71) zugeführt wird, der in einem stromaufwärtigen Abschnitt des Vorsprungs (420) mündet, wobei der Nebenextrusionskanal (71) Auslasskiemen (72, 73) aufweist, die am Rand des Vorsprungs (420) angeordnet sind und eine oder mehrere Seitenauslasskiemen (72) und eine untere Auslasskieme (73) bilden, um in der Nut (P20) des komplexen Profils (PC, PC1, PC2, PC4) ein Randgummi (P3) anzuordnen, das ein Nutboden-Randgummi (P31), das über die untere Auslasskieme (73) auf den Boden der Nut aufgebracht wird, und mindestens ein Seitenrand-Gummi (P30), das über eine Seitenauslasskieme (72) auf die Seitenwand (P11, P12) des Einsatzes (P10) aufgebracht wird, umfasst.

4. Verfahren nach Anspruch 3, wobei das stromabwärtige Ende (52) der Rinne (5) stromauf der Seitenauslasskiemen (73) so angeordnet ist, dass die Seitenwand (P11, P12) des Einsatzes (P10) vor der Aufnahme des Randgummis (P3) gebildet ist.

5. Verfahren nach Anspruch 3 oder 4, wobei zur Bildung des Randgummis (P3) eine dritte Kautschukmischung (M3) genutzt wird, die dieselbe Zusammensetzung wie die zweite Kautschukmischung (M2) aufweist.

6. Coextrusionsverfahren nach einem der vorhergehenden Ansprüche, wobei während seiner Voranbewegung in der Rinne der Querschnitt des Einsatzes (P10) in einer Ebene senkrecht zur Längsrichtung zwischen dem Ausgang des stromaufwärtigen Luftspalts und dem Eingang des stromabwärtigen Luftspalts abnimmt.

7. Coextrusionsverfahren nach einem der vorhergehenden Ansprüche, wobei am Eingang des stromaufwärtigen Luftspalts der Querschnitt des Einsatzes (P10) in einer Ebene senkrecht zur Längsrichtung eine dreieckige Form aufweist.

8. Coextrusionsverfahren nach einem der vorhergehenden Ansprüche, wobei am Ausgang des stromabwärtigen Luftspalts ein äußerer Scheitelpunkt des Einsatzes (P10) bündig mit der Außenfläche des komplexen Profils (PC) ist.

9. Coextrusionsverfahren nach einem der vorhergehenden Ansprüche, wobei die zweite Mischung (M2) mit jeder der Seitenwände (P11, P12) mindestens eines Einsatzes (P10) in Verbindung gebracht wird.

10. Coextrusionsverfahren nach einem der vorhergehenden Ansprüche, wobei die zweite Mischung (M2) mit einer einzelnen der Seitenwände (P11, P12) mindestens eines Einsatzes (P10) in Verbindung gebracht wird.

11. Coextrusionsverfahren nach einem der vorhergehenden Ansprüche, wobei ein erstes Profil (P1) extrudiert wird, das keine Unterbrechung in einer Querrichtung (DT) senkrecht zur Längsrichtung aufweist, und dessen Breite über alles in der Querrichtung (DT) betrachtet vorzugsweise mehr als die Hälfte, und besser noch mindestens 70% der Breite über alles des erhaltenen komplexen Profils (PC) darstellt.

12. Coextrusionsverfahren nach einem der vorhergehenden Ansprüche, wobei
- die untere Wand des Extrusionskopfs eine konkave Form eines bestimmten zylindrischen Achsenprofils aufweist, das sich in Querrichtung erstreckt, und dessen eine Umfangsrichtung mit der Längsrichtung zusammenfällt, die die Voranbewegungsrichtung des Profils in der Maschine definiert, und
- die Profilierungswand von einer zylindrischen Rolle (10) gebildet ist, die um eine Achse (12) drehbeweglich ist, die mit der Achse der unteren Wand (20) zusammenfällt, deren eine radial äußere Wand (11) die Profilierungswand bildet.

13. Reifen, der von einem komplexen Profil gebildet ist, der mithilfe eines Coextrusionsverfahrens nach einem der Ansprüche 1 bis 12 hergestellt ist.

14. Extrusionskopf (2) für ein komplexes Profil, das aus der Anordnung von Profilen (P1, P2) gebildet ist, die aus gesonderten Kautschukmischungen (M1, M2) gebildet sind, der dazu bestimmt ist, an einer Coextrusionsmaschine (1) angebracht zu sein, und wobei sich die Profile in einem Extrusionshohlraum in einer Extrusionsrichtung von stromauf nach stromab unter Definition einer Längsrichtung (DL) voran bewegen, wobei der Extrusionskopf (2) eine untere Wand (20) umfasst, die den Extrusionshohlraum teilweise begrenzt, und unter Voranbewegung von stromauf nach stromab der unteren Wand (20) in der Längsrichtung (DL):
- einen stromaufwärtigen Extrusionsblock (3), der einen stromaufwärtigen Extrusionskanal (31) aufweist, der am Ausgang eines stromaufwärtigen Extruders (30) platziert ist und der in der unteren Wand (20) mündet, um einen Strom einer ersten Kautschukmischung (M1) zuführen zu können,
- ein stromaufwärtiges Profilierungsblatt (32), das in Querrichtung stromab des stromaufwärtigen Extrusionskanals (31) angeordnet ist, um ein erstes Querprofil eines ersten Profils (P1) zu bestimmen, das aus dem Strom der ersten Kautschukmischung (M1) gebildet ist,
- einen stromabwärtigen Extrusionsblock (4), der einen stromabwärtigen Extrusionskanal (41) aufweist, der am Ausgang eines stromabwärtigen Extruders (40) platziert ist und der in der unteren Wand (20) stromab des stromaufwärtigen Profilierungsblatts (32) mündet, um einen Strom einer zweiten Kautschukmischung (M2) zuführen zu können und den Strom der zweiten Mischung an einem Stromverbindungsbereich mit dem Strom der ersten Kautschukmischung (M1) in Verbindung zu bringen,
- ein stromabwärtiges Profilierungsblatt (42), das in Querrichtung stromab des stromabwärtigen Extrusionskanals (41) und des Stromverbindungsbereichs angeordnet ist, um ein Querprofil des komplexen Profils (PC) zu bestimmen, das aus der ersten und zweiten Kautschukmischung (M1, M2) gebildet ist,
**dadurch gekennzeichnet, dass** der Extrusionskopf mindestens eine Rinne (5) aufweist, die von Wänden (53, 54, 55) gebildet ist, die sich in der Längsrichtung (DL) zwischen dem stromaufwärtigen Profilierungsblatt (32) und dem stromabwärtigen Profilierungsblatt (42) von einem stromaufwärtigen Ende (51) der Rinne (5), das sich stromauf der Verbindungsstelle der Ströme der ersten und zweiten Kautschukmischung (M1, M2) befindet, bis zu einem stromabwärtigen Ende (52) der Rinne (5), das sich stromab der Verbindungsstelle der Ströme und stromauf des stromabwärtigen Profilierungsblatts (42) befindet, erstrecken, wobei die Wände (53, 54, 55) der Rinne zusammen eine konkave Fläche bilden, die zum Inneren des Extrusionshohlraums offen ist, und so angeordnet sind, dass einerseits ein Anteil des Stroms der ersten Kautschukmischung (M1), der dazu bestimmt ist, einen Einsatz (P10) im komplexen Profil (PC) zu bilden, in die Rinne (5) eindringen und sich in Längsrichtung in der Rinne (5) voran bewegen kann, ohne mit der zweiten Kautschukmischung (M2) in Kontakt gebracht zu werden, dabei jedoch mit einer Unterschicht (P14) des ersten Profils (P1) aus der ersten Kautschukmischung (M1) stoffschlüssig bleibt, die in einem stromaufwärtigen Luftspalt in Form gebracht worden sein wird, der vom stromaufwärtigen Profilierungsblatt (32) definiert ist, und dass andererseits ein Inverbindungbringen einer oder mehrerer Seitenwände (P11, P12) des Einsatzes (P10) mit der zweiten Kautschukmischung (M2) anschließend in einem stromabwärtigen Luftspalt erfolgt, der vom stromabwärtigen Profilierungsblatt (42) definiert ist.

15. Extrusionskopf nach Anspruch 14, **dadurch gekennzeichnet, dass** das stromabwärtige Profilierungsblatt (42) mindestens einen Vorsprung (420) zur Bildung einer Längsnut (P20) im komplexen Profil (PC) umfasst, dadurch, dass die Rinne (5) so angeordnet ist, dass sie den Einsatz (P10) an der Grenze eines Seitenrands der Nut (P20) so anordnet, dass eine Seitenwand (P11, P12) des Einsatzes (P10) den Rand der Nut bildet, und dadurch, dass der Nebenextrusionskanal (71) Auslasskiemen (72, 73) aufweist, die am Rand des Vorsprungs (420) stromauf des Vorsprungs (420) angeordnet sind und eine oder mehrere Seitenauslasskiemen (72) und eine untere Auslasskieme (73) bilden, damit in der Nut (P20) des komplexen Profils (PC1, PC2) ein Randgummi (P3) angeordnet werden kann, das ein Nutboden-Randgummi (P31), das über die untere Auslasskieme (73) auf den Boden der Nut aufgebracht ist, und mindestens ein Seitenrand-Gummi (P30), das über eine Seitenauslasskieme (72) auf die Seitenwand (P11, P12) des Einsatzes (P10) aufgebracht ist, umfasst.

## Claims

1. Coextrusion method for the coextrusion of a complex profiled element (PC) made up of the assembly of profiled elements (P1, P2) formed from distinct rubber compounds (M1, M2), in which, using a coextrusion machine (1) comprising an upstream extruder (30) and a downstream extruder (40) delivering into an extrusion cavity formed by the space comprised between a lower wall (20) of an extrusion head (2) and a profiling wall (11) positioned opposite the lower wall (20), steps are implemented during which:
- using the upstream extruder (30), a first rubber compound (M1) which emerges from an upstream extrusion canal (31) in the lower wall (20) of the extrusion head (2) is delivered upstream of a first profiling blade (32) referred to as the "upstream profiling blade" (32),
- a first profiled element (P1), formed of the first rubber compound (M1), is created in an upstream gap which is defined by the upstream profiling blade (32) and the profiling wall (11), the said first profiled element (P1) comprising at least a first profiled-element portion which is intended to form a sublayer (P14) and at least a second profiled-element portion which is intended to form a longitudinal insert (P10), a base (P13) of which is in continuity of material with the said sublayer (P14), and which on the said sublayer (P14) forms a protrusion lateral walls (P11, P12) of which extend outwards with respect to an external surface of the said first profiled element,
- using the downstream extruder (40), a second rubber compound (M2) is delivered via a downstream extrusion canal (41) which opens into the lower wall (20) of the extrusion head (2) downstream of the upstream profiling blade (32), and the second rubber compound (M2) is brought together with the radially external surface of the first profiled element (P1) at the region where the stream of second rubber compound (M2) meets the stream of first rubber compound (M1),
- the first profiled element (P1) and the second rubber compound (M2) are passed through a downstream gap which is positioned downstream of the downstream extrusion canal (40) and which is defined by a second profiling blade (42), referred to as the "downstream profiling blade" (42), and the profiling wall (11), so as to create a complex profiled element (PC) formed of the first and of the second rubber compounds (M1, M2),
the said method being **characterized in that** a portion of the first rubber compound (M1), intended to form the insert (P10), is circulated between walls (53, 54, 55) of a channel (5) which extend in a longitudinal direction (DL) between the upstream profiling blade (32) and the downstream profiling blade (42), from an upstream end (51) of the channel (5) which is situated upstream of the meeting of the streams of the first and second rubber compounds (M1, M2), as far as a downstream end (52) of the said channel (5) which is situated downstream of the said meeting of the streams and upstream of the downstream profiling blade (42), the said walls (53, 54, 55) of the channel together forming a concave surface open towards the inside of the extrusion cavity and being positioned in such a way that the portion of the first rubber compound (M1) that enters the channel (5) and that is intended to form the insert (P10), as it progresses longitudinally along the channel (5), remains in continuity of material with the sublayer (P14) without being brought into contact with the second rubber compound (M2), and so that the bringing-together of one or more lateral walls (P11, P12) of the said insert (P10) with the second rubber compound (M2) then takes place in the downstream gap defined by the downstream profiling blade (42) and the profiling wall (11).

2. Coextrusion method according to Claim 1, in which the walls (53, 54, 55) of the channel (5) extend from the upstream gap as far as the downstream gap.

3. Coextrusion method according to Claim 1 or Claim 2, in which the downstream profiling blade (42) comprises at least one projection (420) to form a longitudinal tread-groove (P20) in the complex profiled element (PC), in which method the insert (P10) is placed at the boundary of a lateral edge of the said tread-groove (P20) so that a lateral wall (P11, P12) of the said insert (P10) forms the edge of the said tread-groove, and in which, using an ancillary extruder (70), a third rubber compound (M3) is delivered via an ancillary extrusion canal (71) which opens into an upstream part of the projection (420), the said ancillary extrusion canal (71) comprising outlet openings (72, 73) positioned at the edge of the said projection (420) and forming one or more lateral outlet openings (72) and a lower outlet opening (73), so that an edging rubber (P3) which comprises a groove-bottom edging rubber (P31) applied on the bottom of the tread-groove by the lower outlet opening (73) and at least one lateral edging rubber (P30) deposited on the lateral wall (P11, P12) of the insert (P10) by a lateral outlet opening (72) can be deposited in the tread-groove (P20) of the complex profiled element (PC, PC1, PC2, PC4).

4. Method according to Claim 3, in which the downstream end (52) of the channel (5) is positioned upstream of the lateral outlet openings (73) so that the lateral wall (P11, P12) of the insert (P10) is formed before it receives the edging rubber (P3).

5. Method according to Claim 3 or 4, in which a third rubber compound (M3), which has the same composition as the second rubber compound (M2), is used to form the edging rubber (P3).

6. Coextrusion method according to any one of the preceding claims, in which, as it progresses along the channel, the cross section of the insert (P10) on a plane perpendicular to the longitudinal direction decreases between the exit from the upstream gap and the entry to the downstream gap.

7. Coextrusion method according to any one of the preceding claims, in which, at the entry to the downstream gap, the cross section of the insert (P10) on a plane perpendicular to the longitudinal direction is triangular in shape.

8. Coextrusion method according to any one of the preceding claims, in which, at the exit from the downstream gap, an external vertex of the insert (P10) lies flush with the external surface of the complex profiled element (PC).

9. Coextrusion method according to any one of the preceding claims, in which the second compound (M2) is brought together with each of the lateral walls (P11, P12) of at least one insert (P10).

10. Coextrusion method according to any one of the preceding claims, in which the second compound (M2) is brought together with just one of the lateral walls (P11, P12) of at least one insert (P10).

11. Coextrusion method according to any one of the preceding claims, in which there is extruded a first profiled element (P1) that has no discontinuity in a transverse direction (DT) perpendicular to the longitudinal direction, and of which, for preference, the overall width considered in the said transverse direction (DT), represents more than half, and more preferably at least 70%, of the overall width of the complex profiled element (PC) obtained.

12. Coextrusion method according to any one of the preceding claims, in which
- the lower wall of the extrusion head has a concave shape with a cylindrical profile the given axis of which extends transversely, and a circumferential direction of which coincides with the longitudinal direction defining the direction of progress of the profiled element through the machine, and
- the profiling wall is formed by a cylindrical roller (10), capable of rotating about an axis (12) coinciding with the axis of the lower wall (20), a radially external wall (11) of which forms the said profiling wall.

13. Tyre formed form a complex profiled element produced using a coextrusion method according to any one of Claims 1 to 12.

14. Extrusion head (2) for extruding a complex profiled element made up of the assembly of profiled elements (P1, P2) formed from distinct rubber compounds (M1, M2), intended to be mounted on a coextrusion machine (1), and through which the profiled elements progress in an extrusion cavity in a direction of extrusion extending from upstream to downstream, defining a longitudinal direction (DL), the said extrusion head (2) comprising a lower wall (20) partially delimiting the said extrusion cavity and, from upstream towards downstream of the said lower wall (20) in the longitudinal direction (DL):
- an upstream extrusion unit (3) comprising an upstream extrusion canal (31) which is positioned at the outlet of an upstream extruder (30) and which opens into the lower wall (20) so as to be able to deliver a stream of a first rubber compound (M1),
- an upstream profiling blade (32), positioned transversely downstream of the upstream extrusion canal (31) to determine a first transverse profile of a first profiled element (P1) formed from the said stream of first rubber compound (M1),
- a downstream extrusion unit (4) comprising a downstream extrusion canal (41) which is positioned at the outlet of a downstream extruder (40) and which opens into the lower wall (20) downstream of the upstream profiling blade (32) so as to be able to deliver a stream of a second rubber compound (M2) and bring the said stream of second compound together with the stream of first rubber compound (M1) in a stream meeting region,
- a downstream profiling blade (42) which is positioned transversely downstream of the downstream extrusion canal (41) and of the stream meeting region, to determine a transverse profile of the complex profiled element (PC) formed from the first and second rubber compounds (M1,M2),
**characterized in that** the said extrusion head comprises at least one channel (5), formed by walls (53, 54, 55) which extend in the longitudinal direction (DL) between the upstream profiling blade (32) and the downstream profiling blade (42), from an upstream end (51) of the channel (5) which is situated upstream of the region in which the streams of the first and second rubber compounds (M1, M2) meet, as far as a downstream end (52) of the said channel (5) which is situated downstream of the said region in which the streams meet and upstream of the downstream profiling blade (42), the said walls (53, 54, 55) of the channel together forming a concave surface open towards the inside of the extrusion cavity and being positioned in such a way that, on the one hand, a portion of the stream of the first rubber compound (M1) intended to form an insert (P10) in the complex profiled element (PC) can enter the channel (5) and progress longitudinally in the said channel (5) without being brought into contact with the second rubber compound (M2) but remaining in continuity of material with a sublayer (P14) of the first profiled element (P1) made of the first rubber compound (M1), which will have been formed in an upstream gap defined by the upstream profiling blade (32), and that, on the other hand, a bringing-together of one or more lateral walls (P11, P12) of the said insert (P10) with the second rubber compound (M2) then takes place in a downstream gap defined by the downstream profiling blade (42).

15. Extrusion head according to Claim 14, **characterized in that** the downstream profiling blade (42) comprises at least one projection (420) to form a longitudinal tread-groove (P20) in the complex profiled element (PC), **in that** the channel (5) is arranged in such a way as to position the insert (P10) at the boundary of a lateral edge of the said tread-groove (P20) so that a lateral wall (P11, P12) of the said insert (P10) forms the edge of the said tread-groove, and **in that** the ancillary extrusion canal (71) comprises outlet openings (72, 73) positioned at the edge of the said projection (420), upstream of the said projection (420), and forming one or more lateral outlet openings (72) and a lower outlet opening (73), so that an edging rubber (P3) which contains a groove-bottom edging rubber (P31) applied on the bottom of the tread-groove by the lower outlet opening (73) and at least one lateral edging rubber (P30) applied on the lateral wall (P11, P12) of the insert (P10) by a lateral outlet opening (72) can be applied to the tread-groove (P20) of the complex profiled element (PC1, PC2).
